# EUROPÄISCHE PATENTSCHRIFT

(11) **EP 2 950 268 B1**
(45) Veröffentlichungstag und Bekanntmachung des Hinweises auf die Patenterteilung: **04.07.2018**
(21) Anmeldenummer: 14170301.7
(22) Anmeldetag: 28.05.2014
(51) Int. Cl.: G06T 7/521

(54) **Verfahren und Vorrichtung zur Erfassung der dreidimensionalen Form eines Objekts**
Method and device for detecting the three-dimensional shape of an object
Procédé et dispositif d'enregistrement de la forme tridimensionnelle d'un objet

(43) Veröffentlichungstag der Anmeldung: 02.12.2015
(73) Patentinhaber: Wincor Nixdorf International GmbH, 33106 Paderborn (DE)
(72) Erfinder: Fedorenko, Sergej, 194355 St. Petersburg (RU); Baitz, Günter, 13629 Berlin (DE); Schäfer, Oliver, 10369 Berlin (DE)

(56) Entgegenhaltungen:
- WO-A1-2014/020823
- US-A1- 2010 118 123
- US-A1- 2010 245 851
- US-A1- 2012 092 680
- ALI OSMAN ULUSOY ET AL: "One-shot scanning using De Bruijn spaced grids", 2009 IEEE 12TH INTERNATIONAL CONFERENCE ON COMPUTER VISION WORKSHOPS, ICCV WORKSHOPS : KYOTO, JAPAN, 27 SEPTEMBER - 4 OCTOBER 2009, INSTITUTE OF ELECTRICAL AND ELECTRONICS ENGINEERS, PISCATAWAY, NJ, 27. September 2009 (2009-09-27), Seiten 1786-1792, XP031664529, ISBN: 978-1-4244-4442-7
- SALVI J ET AL: "Pattern codification strategies in structured light systems", PATTERN RECOGNITION, ELSEVIER, GB, Bd. 37, Nr. 4, 1. April 2004 (2004-04-01), Seiten 827-849, XP004491495, ISSN: 0031-3203, DOI: 10.1016/J.PATCOG.2003.10.002

## Beschreibung

Die Erfindung betrifft ein Verfahren und eine Vorrichtung zur Erfassung der dreidimensionalen Form eines Objekts.

Die berührungsfreie Bestimmung der dreidimensionalen Form eines Objektes spielt in einer Vielzahl technischer Anwendungen eine Rolle. Beispielhafte Anwendungen bestehen in der Erkennung der dreidimensionalen Form von Objekten, die ein Roboter greifen soll oder in der Erkennung der dreidimensionalen Form von Waren eines Supermarktes oder anderen Verkaufsgeschäfts, um diese - ggf. mit Hilfe weiterer Parameter - automatisch zu identifizieren.

Aus der WO 2012/048889 A1 sind eine Vorrichtung und ein Verfahren zur dreidimensionalen Bilderfassung bekannt, bei denen Distanzinformationen aufgrund eines einzelnen Kamerabildes berechnet werden. Dabei werden eine Kamera und eine Beleuchtungseinrichtung, die ein zu erfassendes Objekt strukturiert beleuchtet, winklig zueinander angeordnet. Eine Distanzermittlung erfolgt mittels eines Triangulationsverfahrens.

Um Mehrdeutigkeiten zu eliminieren, ist bei der WO 2012/048889 A1 des Weiteren vorgesehen, dass das Beleuchtungsmuster, das die Beleuchtungseinrichtung auf dem zu erfassenden Objekt bereitstellt, einen in zwei unterschiedlichen Raumrichtungen modulierten zweidimensionalen Code mit Codeelementen enthält.

Die US 2010/245851 A1 beschreibt die Beleuchtung eines Objektes mit einem strukturierten Beleuchtungsmuster und das Erfassen dieses strukturierten Beleuchtungsmusters durch einen Detektor, der das Bild in eine Bildebene abbildet. Zur 3D-Bestimmung eines Objektes erfolgt die Auswertung von Epipolar-Beziehungen. Dabei wird auch der Abstand der Bildgitterpunkte in der Bildebene des Detektors zu Epipolarlinien betrachtet.

Die US 2012/092680 A1 beschreibt ein Verfahren zum Bestimmen von Bereichsrahmenkoordinaten in bewegten Szenen, bei dem optische Strahlung in Form von Punkten und Streifen auf eine Szene projeziert wird. Reflektierte Strahlung wird über eine Kamera aufgenommen, und Bereichskoordinaten werden hieraus berechnet.

Der vorliegenden Erfindung liegt die Aufgabe zugrunde, ausgehend von dem genannten Stand der Technik ein Verfahren und eine Vorrichtung zur Erfassung der dreidimensionalen Form eines Objektes bereitzustellen, die eine solche Erfassung mit verbesserter Qualität ermöglichen.

Diese Aufgabe wird erfindungsgemäß durch ein Verfahren mit den Merkmalen des Anspruchs 1 und eine Vorrichtung mit den Merkmalen des Anspruchs 14 gelöst. Ausgestaltungen der Erfindung sind in den Unteransprüchen angegeben.

Danach sieht das erfindungsgemäße Verfahren vor, ein im Hinblick auf seine dreidimensionale Form zu erfassendes Objekt mittels einer Beleuchtungseinrichtung mit einem Beleuchtungsmuster zu beleuchten, das eine Vielzahl von Gitterpunkten aufweist, wobei die Gitterpunkte eine räumliche Modulation aufweisen. Die räumliche Modulation kann beispielsweise darin bestehen, dass bestimmte Gitterpunkte abweichend von einer periodischen Anordnung bereitgestellt werden.

Das mit dem Beleuchtungsmuster beleuchtete Objekt wird mit einer Kamera aufgenommen, wobei zwischen der Beleuchtungsrichtung der Beleuchtungseinrichtung und der Betrachtungsrichtung der Kamera ein spitzer Winkel besteht. Dies ist erforderlich, um Messprinzipien der Triangulation einzusetzen.

Das von der Kamera erfasste Beleuchtungsmuster des beleuchteten Objektes wird in die Bildebene der Kamera abgebildet. Zunächst erfolgt hierzu eine Bestimmung der Bildpunkte: Aufgrund lokaler statistischer Merkmale wie z.B. einer kleinen gegenüber der Nachbarschaft helleren Teilfläche werden lokal zusammenhängende Bildpunktmengen segmentiert. Wenn die Prüfung statistischer Merkmale (z. B. Fläche in Pixel, Momente zur Schwerpunktbestimmung, mittlerer Grauwert, etc.) ergibt, dass die zusammenhängende Bildpunktmenge eine definierte Erwartung erfüllt, dann handelt es sich um die Abbildung eines Gitterpunkts. Des Weiteren wird jeweils der Schwerpunkt einer zusammenhängenden Bildpunktmenge bestimmt; dabei kann es sich zum Beispiel um den Helligkeitsschwerpunkt oder den Flächenschwerpunkt der zusammenhängenden Bildpunktmenge handeln. Im Folgenden werden unter dem Begriff Bildgitterpunkt dessen Schwerpunktkoordinaten in der Bildebene verstanden, als Objektgitterpunkt wird die korrespondierende Raumkoordinate auf dem Objekt bezeichnet. Die Zuordnung der Bildgitterpunkte zu den korrespondierenden Objektgitterpunkten wird als Korrespondenzanalyse bezeichnet.

Es ist nun erfindungsgemäß vorgesehen, dass jedem Bildgitterpunkt mindestens eine Raumkoordinate des zugehörigen Objektgitterpunkts zugeordnet wird. Bei dieser Raumkoordinate handelt es sich beispielsweise um die z-Koordinate bzw. die Höhe des jeweiligen Objektgitterpunktes bezogen auf eine Referenzfläche. Der Zuordnungsprozess umfasst eine Mehrzahl von Schritten. Dabei wird von dem Umstand ausgegangen, dass eine Mehrzahl von Epipolarlinien vorberechnet und abgespeichert wurde. Die Epipolarlinien werden dadurch erzeugt, dass der Abstand eines mit dem Beleuchtungsmuster beleuchteten ebenen Objektes zum Projektor und zur Kamera auf einer Achse verschoben wird, wobei jede Epipolarlinie die Wanderung eines Bildgitterpunktes bei einer solchen Abstandsänderung in der Bildebene angibt.

Erfindungsgemäß wird genau eine zu einem betrachteten Bildgitterpunkts benachbarte Epipolarlinie aus der Mehrzahl der vorberechneten und abgespeicherten Epipolarlinien bestimmt und ausgewählt. Aus einer solchen ausgewählten Epipolarlinie lässt sich dann mindestens eine Raumkoordinate des zugehörigen Objektgitterpunktes bestimmen.

Zunächst besteht jedoch das Problem, die richtige Epipolarlinie aus der Vielzahl von Epipolarlinien, die einem betrachteten Bildgitterpunkt benachbart sind, auszuwählen. Es kann sich beispielsweise um zwei bis fünfzehn Epipolarlinien handeln, die als Kandidaten für die Zuordnung des betrachteten Bildgitterpunktes zu einem korrespondierenden Objektgitterpunkt in Frage kommen. Es wird eine dieser benachbarten Epipolarlinien ausgewählt, um eine eindeutige Zuordnung des Bildgitterpunktes zu einer Epipolarlinie bereitzustellen.

Zum Beispiel durch eine Periodizität des Gitters (die auch bei einem an sich nichtperiodischen Gitter durch Messfehler entstehen kann) können jedoch mehrere mögliche Zuordnungen entstehen. Die richtige Auswahl erfolgt dadurch, dass mindestens ein Abstands des Bildgitterpunktes oder der Projektion des Bildgitterpunktes auf die jeweilige Epipolarlinie zu mindestens einem definierten Punkt der Epipolarlinie für eine Mehrzahl benachbarter Epipolarlinien bestimmt wird. Eine Auswahl einer dieser benachbarten Epipolarlinien erfolgt unter Berücksichtigung der ermittelten Abstände, wobei die ermittelten Abstände gefiltert werden, um solche Epipolarlinien auszuschließen, bei denen die ermittelten Abstände unterhalb und/oder oberhalb definierter Grenzwerte oder Mittelwerte und/oder außerhalb definierter Intervalle liegen. Diese Filterkriterien stellen sicher, dass Kontinuitätsbedingungen erfüllt sind in dem Sinne, dass Epipolarlinien mit stark abweichenden ermittelten Abständen des Bildgitterpunktes und dementsprechend stark abweichender Lokalisierung der entsprechenden Gitterpunkte im Objektraum (d.h. auf dem zu identifizierenden Objekt) nicht berücksichtigt werden. Darüber hinaus können zusätzliche Filterkriterien angelegt werden, insbesondere im Hinblick auf Nachbarschaftsinformationen und weitere Kontinuitätsbedingungen.

Sofern nach dem Filtervorgang weiterhin mehrere Epipolarlinien zur Auswahl stehen, wird z.B. diejenige ausgewählt, die den kürzesten Abstand zum betrachteten Bildgitterpunkt aufweist.

Die richtige Auswahl kann insbesondere durch Analyse einer räumlichen Kontinuitätsbedingung erfolgen. Es ist wahrscheinlich, dass im Bildraum benachbarte Bildgitterpunkte z.B. in einer 3x3 Nachbarschaft auch im Objektraum benachbart sind und eine ähnliche z-Koordinate aufweisen. Typisch bilden sich mehrere Gruppen von möglichen Z-Koordinaten heraus, die in deutlichem Abstand zueinander angeordnet sind. Durch Testen der Standardabweichung der z-Koordinaten und weiterer Parameter jeder dieser Gruppen und durch Vergleich mit einem Schwellwert werden gültige Zuordnungen ermittelt.

Falls eine gültige Zuordnung gefunden wurde, können über Nachbarschaftsbeziehungen Indizes (die die Bildgitterpunkte bzw. die Epipolarlinien identifizieren) vererbt werden. Dadurch erreicht man, dass auch Bildgitterpunkte, die über keine ausreichende Kontinuität im Objektraum verfügen, indiziert werden können.

Da die Gitterpunkte des Beleuchtungsmusters, mit dem das Objekt beleuchtet ist, eine räumliche Modulation aufweisen, kann über die räumliche Modulation die Nachbarschaft der einzelnen Gitterpunkte und damit auch der einzelnen Epipolarlinien, die wie erläutert vorberechnet und abgespeichert wurden, erfasst werden. Die Berücksichtigung der räumlichen Modulation erlaubt es daher, einzelne Epipolarlinien sowie deren zugehörige Objektgitterpunkte eindeutig zu identifizieren und Mehrdeutigkeiten auszuschließen bzw. deutlich zu reduzieren.

Auf der ausgewählten Epipolarlinie wird nun der Punkt bestimmt, der dem betrachteten Bildgitterpunkt am nächsten liegt. Der Euklidische Abstand z' dieses Punkts zum Grenzpunkt ("Infinity_point") der zugeordneten Epipolarlinie, d.h. einer angelernten Konstante, ist ein Maß für den Abstand z des Objektgitterpunkts zur Referenzfläche. Der Euklidische Abstand z' kann über ein Polynom (3. - 5. Ordnung) oder eine Tabelle in den Abstand z transformiert werden. Für den Bildgitterpunkt sind hiermit die Koordinaten [x', y', z] bekannt, x' und y' jeweils in Pixel. Diese Koordinaten werden dann punktweise mit Hilfe einer Koordinatentransformation in das gewünschte Ziel- oder Weltkoordinatensystem übertragen (sogenannte Rodriguez-Transformation zur Kalibrierung einer Kamera).

Als letzter Schritt des erfindungsgemäßen Verfahrens erfolgt das Bestimmen mindestens eines Parameters (z.B. der z-Koordinate) der dreidimensionalen Form des Objektes aus den ermittelten Raumkoordinaten. Indem zu einer Vielzahl von Bildgitterpunkten die entsprechenden Raumkoordinaten bestimmt werden, kann aus der Vielzahl der Gitterpunkte die dreidimensionale Form des Objektes zumindest in einem Teilbereich des Objekts insgesamt bestimmt werden.

Es wird darauf hingewiesen, dass erfindungsgemäß vorgesehen sein kann, nicht sämtliche der drei Raumkoordinaten zu einem betrachteten Objekt zu bestimmen. Vielmehr kann es vorgesehen sein, dass die einem Gitterpunkt zugeordnete Raumkoordinate lediglich im Hinblick auf eine Distanzinformation ausgewertet wird, insbesondere im Hinblick auf die Höhe des jeweiligen Gitterpunktes bezogen auf eine Referenzfläche. Das betrachtete und mit einem Beleuchtungsmuster beleuchtete Objekt wird für diesen Fall lediglich im Hinblick auf seine Höheninformationen erfasst. Dieses sehr einfache Verfahren kann zur Erkennung von Objekten mit konstanter Form im Hintergrund, z.B. der Ebene eines Förderbands, bereits innerhalb der Vorverarbeitung benutzt werden, um Datenraten signifikant zu reduzieren.

Eine Ausgestaltung der Erfindung sieht vor, dass die räumliche Modulation der Gitterpunkte des Beleuchtungsmusters eine pseudostatistische Modulation ist. Dies bedeutet, dass einzelne Gitterpunkte des Gitterrasters abweichend von einer symmetrischen Anordnung eine pseudostatistische Verschiebung erfahren. Die räumliche Modulation erlaubt eine eindeutige Identifizierung der einzelnen, durch die Beleuchtungseinrichtung bereitgestellten Strahlenbündel und der Gitterpunkte, die diese erzeugen.

Eine weitere Ausgestaltung der Erfindung sieht vor, dass die Gitterpunkte des Beleuchtungsmusters ein hexagonales Raster bilden. Dabei wird die Modulation der Gitterpunkte durch räumliches Verschieben jeweils mindestens eines Gitterpunktes in einem Sechseck des hexagonalen Rasters bereitgestellt. Dabei ist in einer Ausgestaltung vorgesehen, dass pro betrachtetem Sechseck des hexagonalen Rasters nur einer der Gitterpunkte eine Verschiebung erfährt. Das hexagonale Raster hat den Vorteil einer großen Punktdichte und damit 3D-Auflösung.

Wie bereits erläutert, werden zu den Bildpunkten des beleuchteten Objektes (Objektgitterpunkte) in der Bildebene der Kamera jeweils die Bildgitterpunkte bestimmt. Diese betreffen jeweils den Schwerpunkt einer lokal zusammenhängenden Bildpunktmenge. Diese Bestimmung des Schwerpunktes erfolgt in einer Ausführungsvariante durch Faltung des Bildes des mit dem Beleuchtungsmuster beleuchteten Objektes mit einem Modell einer Musterverteilung. Jedoch kann auch in anderer Weise der Schwerpunkt einer lokal zusammenhängenden Bildpunktmenge bestimmt werden, beispielsweise durch Bestimmung des Flächenschwerpunktes.

Gemäß einer Ausgestaltung der Erfindung ist vorgesehen, dass die Berücksichtigung der räumlichen Modulation des Beleuchtungsmusters und sich daraus ergebende Nachbarschaftsinformationen der Gitterpunkte bei der Auswahl einer Epipolarlinie umfasst, dass Kontinuitätsbedingungen ausgewertet und berücksichtigt werden. Solche Kontinuitätsbedingungen werden unter der Prämisse ausgewertet und berücksichtigt, dass zu Objektgitterpunkten, die auf dem beleuchteten Objekt benachbart sind, auch die entsprechenden Epipolarlinien benachbart sind. Dem entspricht die Aussage, dass der Bildebene benachbarte Bildgitterpunkte mindestens eine ähnliche Raumkoordinate (z.B. eine ähnliche z-Koordinate) im Objektraum aufweisen. Die Kontinuitätsbedingungen berücksichtigen, ob die den Epipolarlinien zugeordneten Gitterpunkte auf einer "gutartigen" Fläche angeordnet sind, bei der benachbarte Strahlen der Beleuchtungseinrichtung zu benachbarten Gitterpunkten auf dem beleuchteten Objekt führen. Dies ist beispielsweise nicht der Fall im Bereich von Kanten, Spitzen oder anderen Inhomogenitäten des Objektes. Für den Fall, dass keine eindeutigen Zuordnungen gefunden wurden, ist es möglich, aus Nachbarschaftsbeziehungen Indizes zu vererben und somit einzeln stehende Bildgitterpunkte, die an erkannte Regionen anschließen, zu verbinden.

Eine Ausgestaltung der Erfindung sieht vor, dass als Abstände der kürzeste Abstand des Bildgitterpunkts zu einer Mehrzahl benachbarter Epipolarlinien ermittelt wird und eine Filterung dieser ermittelten Abstände dahingehend erfolgt, dass nur solche Epipolarlinien betrachtet werden, bei denen die Abstände unterhalb eines definierten Grenzwerts (G₁) liegen.

Die Erfindung sieht vor, dass als Abstände der Abstand des Bildgitterpunktes zu dem jeweiligen Grenzpunkt der benachbarten Epipolarlinien oder der Abstand der Projektion des Bildgitterpunktes auf die jeweilige Epipolarlinie zu dem jeweiligen Grenzpunkt der benachbarten Epipolarlinien bestimmt und dahingehend gefiltert werden, dass solche Epipolarlinien bei der Bestimmung ausgeschlossen werden, bei denen der genannte Abstand zum Grenzpunkt der Epipolarlinie nicht innerhalb eines definierten Intervalls (G₂, G₃) oder unterhalb eines Grenzwertes liegt, d.h. sich deutlich von dem Abstand des Bildgitterpunktes bzw. dessen Projektion auf die jeweilige Epipolarlinie zu Grenzpunkten anderer Epipolarlinien unterscheidet, beispielsweise oberhalb eines Mittelwertes oder eines anderen Grenzwertes liegt.

Der Grenzpunkt einer Epipolarlinie ist dabei der Punkt, der bei Anordnung des Objektes in einer unendlich entfernten Ebene entstehen würde. Er stellt den einen Endpunkt einer Epipolarlinie dar und kann z.B. während des teach-in ((oder der Kalibrierung)) durch Extrapolation mit einem Bestfit-Algorithmus berechnet werden. Auch eine deutliche Änderung des Abstands des Schwerpunkts eines betrachteten Bildpunkts zu den Grenzpunkten bestimmter Epipolarlinien deutet auf Inhomogenitäten oder Mehrdeutigkeiten hin, so dass Epipolarlinien, bei denen ein solcher stark geänderter Abstand zum Grenzpunkt vorliegt, bei der Bestimmung der korrekten Epipolarlinie nicht berücksichtigt werden.

Eine weitere Ausgestaltung der Erfindung sieht vor, dass bei der Filterung der ermittelten Abstände Nachbarschaftsinformationen berücksichtigt werden dahingehend, dass nur solche Zuordnungen gültig sind, bei denen die Indexdifferenz in einer betrachteten Nachbarschaft konstant ist. Die Indizes beziehen sich dabei auf die Indizes der Gitterpunkte bzw. die entsprechenden Indizes der Epipolarlinien. Eine konstante Indexdifferenz bedeutet, dass eine "gutartige" Teilfläche des zu identifizierenden dreidimensionalen Objekts vorliegt, in der die Nachbarschaft korrekt zugeordnet wurde.

Eine Ausgestaltung der Erfindung kann dabei vorsehen, dass den Epipolarlinien jeweils Daten zum Abstand des Bildgitterpunkts zu den Epipolarlinien und/oder Daten zum Abstand des Bildgitterpunkts oder des Abstands der Projektion des Bildgitterpunktes auf die jeweilige Epipolarlinie zum Grenzpunkt der Epipolarlinien zugeordnet und die Zuordnungen in einer Tabelle oder Matrix gespeichert werden. Die Matrix kann dabei zusätzliche Konstanten (cᵢ) für ein Polynom enthalten. Die Matrix wird dann nach Ermittlung der korrekten Zuordnung ((Korrespondenz)) aufgerufen. Der Abstand z kann direkt berechnet werden. Die Koeffizienten der Matrix wurden während des teach-in durch Bestfit-Algorithmen berechnet. Hierzu wurde den korrespondierenden Abständen z die gemessenen Koordinaten der Bildgitterpunkte gegenübergestellt und die Parameter zum Grenzpunkt ("Infinity_point") und die Koeffizienten ermittelt.

Weiter kann vorgesehen sein, dass die in einer solchen Tabelle oder Matrix gespeicherten Daten in Echtzeit auf einem Datenstromprozessor oder in einem FPGA-Baustein (FPGA = "Field Programmable Gate Array"), das heißt in einem integrierten Schaltkreis mit einprogrammierter logischer Schaltung verarbeitet werden. Dies erlaubt eine schnelle 3D-Objekterkennung in Echtzeit.

Eine weitere Ausgestaltung der Erfindung sieht vor, dass beim Bestimmen genau einer zu einem Bildgitterpunkt benachbarten Epipolarlinie aus einer Mehrzahl von benachbarten Epipolarlinien solche benachbarten Epipolarlinien betrachtet werden, bei denen der kürzeste Abstand des Bildgitterpunkts unterhalb eines vorgegebenen Schwellwerts liegt. Es werden somit initial solche Epipolarlinien einer näheren Betrachtung zur Auswahl einer der Epipolarlinien zugeführt, die in der Nachbarschaft des betrachteten Bildgitterpunkts liegen. Beispielsweise werden initial 2 bis 15 Epipolarlinien für die weitere Betrachtung ausgewählt.

Das Beleuchtungsmuster wird in einem Ausführungsbeispiel durch ein Mikrolinsenarray erzeugt, das mit dem Licht eines Projektors bestrahlt wird. Dabei weisen die Mikrolinsen des Mikrolinsenarrays eine räumliche Modulation auf, was zu der räumlichen Modulation der Gitterpunkte des Beleuchtungsmusters führt. Die Bereitstellung des Beleuchtungsmusters durch ein Mikrolinsenarray ist mit dem Vorteil verbunden, dass Gitterpunkte in hoher Auflösung und mit hoher Leuchtkraft auf dem beleuchteten Objekt entstehen. Jedoch ist die vorliegende Erfindung keineswegs darauf beschränkt, die Gitterpunkte des Beleuchtungsmusters mittels eines Mikrolinsenarrays zu erzeugen. Beispielsweise kann das Beleuchtungsmuster alternativ durch ein Diapositiv bereitgestellt werden, das vom Licht der Beleuchtungseinrichtung durchstrahlt wird und ein Beleuchtungsmuster erzeugt.

Gemäß einer Ausgestaltung sind die Mikrolinsen des Mikrolinsenarrays in einem hexagonalen Raster angeordnet. Dabei liegt eine räumliche Modulation des Mikrolinsenarrays dahingehend vor, dass die Lage der optischen Achse mindestens einer Mikrolinse der hexagonal angeordneten Gruppe in Umfangsrichtung oder in radialer Richtung bezogen auf dem Schwerpunkt der Gruppe verschoben.

Weiter kann vorgezogen sein, dass die Gitterpunkte eines Beleuchtungsmusters mindestens eine zusätzliche Modulation aufweisen, beispielsweise eine Helligkeitsmodulation und/oder eine Größenmodulation. Solche zusätzlichen Modulationen können dazu dienen, zusätzliche Parameter für die Auswertung von Nachbarschaftsinformationen bereitzustellen. Im Falle einer Helligkeitsinformation kann dabei vorgesehen sein, dass die Mikrolinsen des Arrays im Hinblick auf ihren Durchmesser moduliert sind.

Die Erfindung betrifft auch eine Vorrichtung zur Erfassung der dreidimensionalen Form eines Objektes.

Die jeweiligen Mittel können beispielsweise durch einen Prozessor in Verbindung mit Software, die die jeweiligen Funktionen erfüllt, bereitgestellt werden.

Die Erfindung wird nachfolgend unter Bezugnahme auf die Figuren der Zeichnung anhand mehrerer Ausführungsbeispiele näher erläutert. Es zeigen:
- Figur 1: schematisch eine Vorrichtung zur Erfassung der dreidimensionalen Form eines Objektes, die eine Beleuchtungseinrichtung und eine Kamera aufweist;
- Figur 2: ein Ausführungsbeispiel einer Beleuchtungseinrichtung, die ein Mikrolinsenarray aufweist;
- Figur 3: ein Ausführungsbeispiel eines Mikrolinsenarrays, das eine räumliche Modulation aufweist;
- Figur 4A-4C: eine hexagonal angeordnete Gruppe von Mikrolinsen eines Mikrolinsenarrays in einer symmetrischen Anordnung und in einer räumlich modulierten Anordnung;
- Figur 5: schematisch eine Vorrichtung zur Erfassung der dreidimensionalen Form eines Objektes unter Darstellung einer Beleuchtungseinrichtung und einer Kamera, wobei die Beleuchtungseinrichtung eine Mehrzahl von Gitterpunkten auf einem Objekt erzeugt;
- Figur 6A: Epipolarlinien, die die Wanderung eines Bildpunktes in der Bildebene der Kamera wiedergeben, wenn das in der Figur 5 dargestellte Objekt in der vertikalen Richtung bewegt wird, sowie Bildgitterpunkte in einer idealisierten, nicht verrauschten Darstellung;
- Figur 6B: Epipolarlinien, die die Wanderung eines Bildpunktes in der Bildebene der Kamera wiedergeben, wenn das in der Figur 5 dargestellte Objekt in der vertikalen Richtung bewegt wird, sowie Bildgitterpunkte in einer realen Darstellung, die Abbildungsfehler und Rauschen aufweist;
- Figur 7: die Entstehung einer Epipolarlinie bei einer Anordnung gemäß der Figur 5;
- Figur 8: einen Bildgitterpunkt in der Bildebene einer Kamera sowie zwei dem Bildgitterpunkt benachbarte Epipolarlinien;
- Figur 9: die Zuordnung zwischen einem Punkt einer Epipolarlinie und einer HöhenKoordinate eines Gitterpunktes; und
- Figur 10: schematisch eine 5x5 Matrix sowie zwei Scanvektoren zur Bestimmung des Schwerpunktes einer Bildpunktmenge durch Faltung.

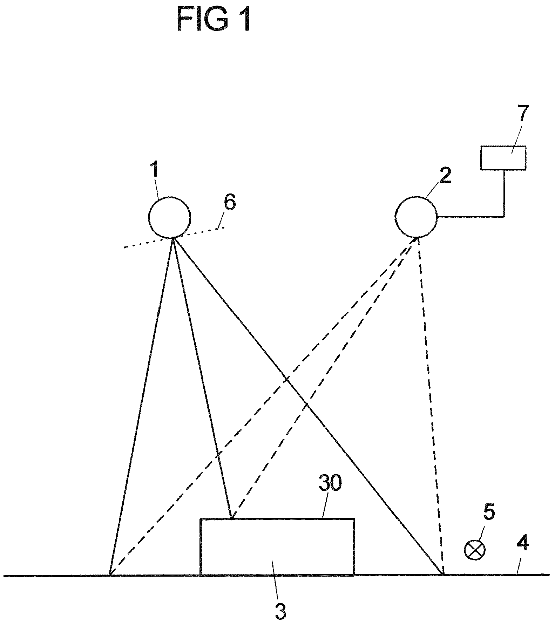

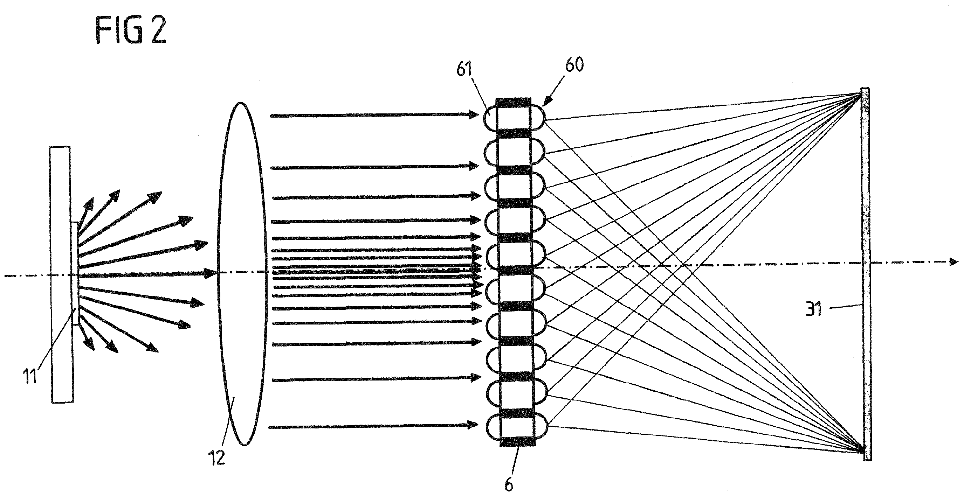

Die Figur 1 zeigt strukturelle Elemente einer Vorrichtung zur Erfassung der dreidimensionalen Form eines Objektes. Die Vorrichtung umfasst eine Beleuchtungseinrichtung 1 und eine Kamera 2. Das Licht der Beleuchtungseinrichtung 1 bestrahlt eine Maske 6, die zusammen mit weiteren optischen Elementen (nicht dargestellt) ein Beleuchtungsmuster (nicht dargestellt) auf der Oberfläche 30 eines Objektes 3 erzeugt. Ein Ausführungsbeispiel der Anordnung von Beleuchtungseinrichtung 1 und Maske 6 wird anhand der Figuren 2 bis 4C erläutert werden.

Das Objekt 3 befindet sich auf einer Referenzfläche 4, die im dargestellten Ausführungsbeispiel, jedoch nicht notwendigerweise, horizontal verläuft. Das Objekt 3 kann eine feste Position im Raum besitzen. Alternativ befindet sich das Objekt 3 auf einer Transportvorrichtung, die das Objekt 3 in einer Richtung 5 senkrecht zur Zeichenebene transportiert. Ein solches Transportmittel ist beispielsweise ein Förderband im Kassenbereich eines Supermarktes oder eines anderen Verkaufsgeschäftes. Alternativ kann das System aus Kamera 2 und Beleuchtungseinrichtung 1 gegenüber einem feststehenden oder ebenfalls bewegten Objekt 3 z. B. auf einem Industrieroboter verfahren werden.

Die von der Beleuchtungseinrichtung 1 und der Maske 6 bereitgestellten Lichtbündel erzeugen ein Beleuchtungsmuster, das eine Vielzahl von Gitterpunkten aufweist, wobei mindestens einige der Gitterpunkte auf die Oberfläche 30 des Objektes 3 projiziert und mittels der Kamera 2 erfasst werden, wie in der Figur 1 durch die durchgezogenen Strahlen, die von der Beleuchtungseinrichtung 1 ausgehen, und die gestrichelten Strahlen, die die Kamera 2 detektiert, angedeutet ist.

Bei der Kamera 2 handelt es sich beispielsweise um eine Digitalkamera oder eine Videokamera, die einen zweidimensionalen CCD-Array-Sensor oder alternativ einen CMOS-Array-Sensor aufweist, der ein Digitalbild bereitstellt (auch als Matrixsensor-Kamera bezeichnet). Die Kamera 2 weist dabei ein Objektiv auf, das die Gitterpunkte des beleuchteten Objektes 3 in eine Bildebene der Kamera abbildet, in der sich der CCD-Chip befindet.

Es wird darauf hingewiesen, dass zwischen der Beleuchtungsrichtung der Bestrahlungseinrichtung 1 und der Betrachtungsrichtung der Kamera 2 ein spitzer Winkel besteht. Die Beleuchtungsrichtung der Bestrahlungseinrichtung 1 ist dabei die Raumrichtung, die der Ausstrahlrichtung des Schwerpunkts der von der Beleuchtungseinrichtung 1 ausgestrahlten Lichtbündel entspricht. Die Betrachtungsrichtung der Kamera 2 wird durch die optische Achse der Kamera 2 definiert.

Der Kamera 2 ist eine Recheneinrichtung 7 zugeordnet, an die ein von der Kamera 2 erfasstes Digitalbild übertragen und zur Berechnung der dreidimensionalen Form des Objektes 3 ausgewertet wird. Dabei kann vorgesehen sein, dass die Recheneinrichtung 7 einen FPGA-Prozessor und/oder einen Datenstromprozessor und/oder ein vergleichbares Bauelement mit programmierbarer Logik aufweist, das eine Berechnung von 3D-Koordinaten in Echtzeit gewährleistet. Alternativ wird das digitale Bild an eine externe Vorrichtung übertragen und dort weitergehend ausgewertet.

In der schematischen Darstellung der Figur 1 sind die Beleuchtungseinrichtung 1 und die Kamera 2 baulich getrennt. Alternativ kann vorgesehen sein, dass die Beleuchtungseinrichtung 1 und die Kamera 2 in einem gemeinsamen Gehäuse angeordnet sind. Auch kann vorgesehen sein, dass mehrere Beleuchtungseinrichtungen 1 und/oder Kameras 2 vorgesehen sind.

Die Figur 2 zeigt ein Ausführungsbeispiel einer Beleuchtungseinrichtung 1 mit zugeordneter Maske 6. Die Beleuchtungseinrichtung umfasst eine Lichtquelle 11, beispielsweise in Form ein oder mehrerer LEDs oder Laser, die Licht aussendet. Das durch die Lichtquelle 11 ausgesandte Licht wird in einer Kollimationsoptik 12 zumindest näherungsweise parallelisiert und beleuchtet eine Maske 6, die eine Homogenisierungsoptik darstellt und ein Mikrolinsenarray 60 mit Mikrolinsen 61 umfasst. Das Mikrolinsenarray 60 erzeugt eine Anzahl von Lichtbündeln, die der Anzahl der Mikrolinsen 61 des Mikrolinsenarrays 60 entspricht, und beleuchtet mit diesen Lichtbündeln die Oberfläche 31 des zu untersuchenden Objektes, vgl. Figur 1. Das Mikrolinsenarray 60 stellt dabei ein strukturiertes Beleuchtungsmuster in Form von Rasterpunkten auf der Objektoberfläche 31 bereit. Für die meisten makroskopischen Anwendungen ist Schnittweite des Mikrolinsenarrays 60 zu gering. Es wird deshalb eine zusätzliche, nicht gezeigte Feldlinse oder ein Objektiv eingesetzt. In diesem Fall stellt die Ebene 31 eine Zwischenbildebene dar, die dann auf das Objekt 3 abgebildet wird.

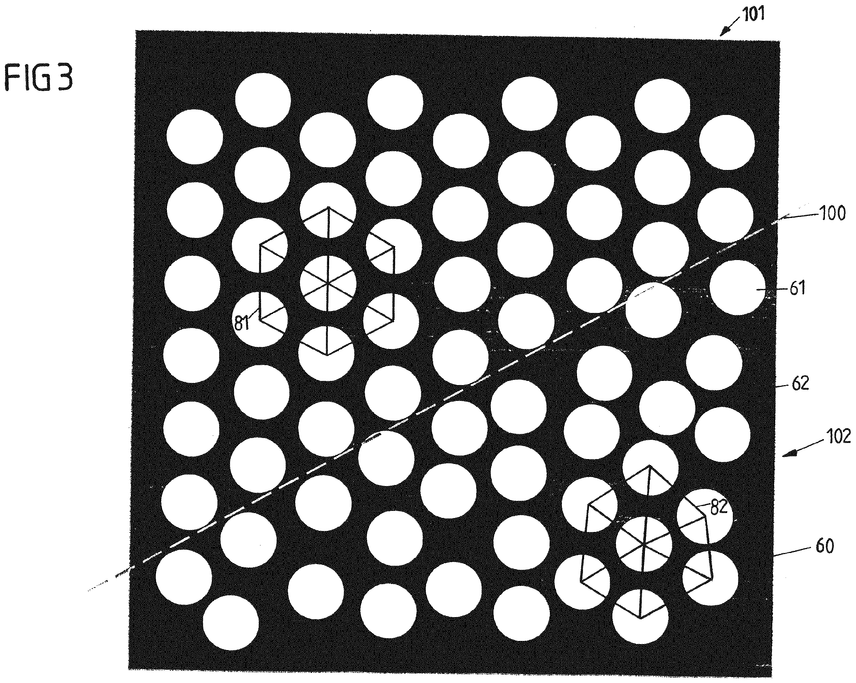

Die Figur 3 zeigt schematisch ein Mikrolinsenarray 60, das eine Vielzahl von Mikrolinsen 61 umfasst. Die Zwischenräume 62 zwischen den Mikrolinsen 61 sind durch eine lichtundurchlässige Schicht abgedeckt, so dass kein Licht durch sie hindurchtreten kann. Dabei kann vorgesehen sein, dass eine lichtundurchlässige Schicht sowohl auf der Vorderseite als auch auf der Rückseite des Mikrolinsenarrays 60 realisiert ist.

Die Figur 3 weist einen oberen Bereich 101 und einen unteren Bereich 102 auf, die durch eine Trennlinie 100 voneinander getrennt sind. Es wird darauf hingewiesen, dass diese beiden Bereiche 101, 102 lediglich dazu dienen, unterschiedliche Anordnungen von Mikrolinsen zu erläutern. Solche unterschiedlichen Bereiche sind in einem tatsächlich eingesetzten Mikrolinsenarray nicht vorhanden, das erfindungsgemäß stets eine Anordnung gemäß dem unteren Teil 102 aufweist.

Gemäß dem oberen Teil 101 der Figur 3 sind die Mikrolinsen 61 in einem hexagonal angeordneten symmetrischen Gitter angeordnet. Eine betrachtete Gruppe des hexagonalen Gitters umfasst eine mittige Mikrolinse und sechs an den Ecken eines regelmäßigen Hexagons angeordnete weiter Mikrolinsen. Die Struktur eines regelmäßigen Hexagons ist durch die Gitterlinie 81 angedeutet.

Davon abweichend ist die Anordnung der Mikrolinsen im unteren Bereich 102 der Figur 3 räumlich verändert worden. So sind sieben Mikrolinsen einer betrachteten Gruppe nicht mehr in der Mitte und an den sechs Ecken eines regelmäßigen Hexagons angeordnet, sondern bilden ein unregelmäßiges Sechseck, wie durch die Gitterlinie 82 angedeutet ist.

Durch diese Abweichung von der symmetrischen Ausgestaltung des Gitters haben die Gitterpunkte des Gitters eine räumliche Modulation erfahren, durch die die einzelnen Mikrolinsen 61 im Hinblick auf ihre Lage in dem Gesamtgitter identifiziert sind. Diese Modulation der Mikrolinsen 61 weisen in gleicher Weise die Gitterpunkte des Beleuchtungsmusters auf, das die Mikrolinsen 61 auf der Oberfläche des Objektes bereitstellen.

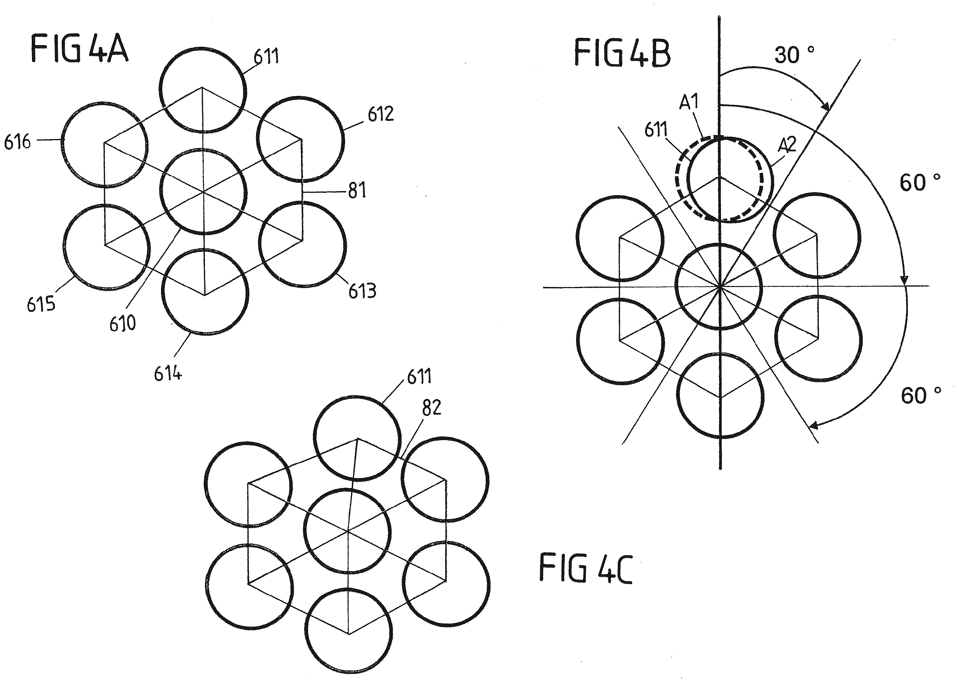

Die Bereitstellung einer räumlichen Modulation der Mikrolinsen 61 im unteren Teil 102 der Figur 3 ist anhand der Figuren 4A bis 4C weitergehend dargestellt. Die Figur 4A zeigt zunächst eine regelmäßige hexagonal angeordnete Gruppe mit einer mittigen Mikrolinse 610 und sechs an den Ecken eines regelmäßigen Hexagons angeordneten Mikrolinsen 611 bis 616.

Es wird gemäß der Figur 4B eine der Mikrolinsen, im dargestellten Ausführungsbeispiel die obere Mikrolinse 611, in Umfangsrichtung verschoben, wobei sie von einer ersten Position A1 in eine zweite Position A2 überführt wird. Gegenüber den Hauptrichtungen des hexagonalen Musters (in der Figur 4A-4C 0°, 60° und 120°) werden die Lagen der einzelnen optischen Achsen marginal in Umfangsrichtung verschoben. Der Wert für die Verschiebung liegt dabei beispielsweise bei ca. 7% der Gitterkonstanten.

Diese Verschiebung geht einher mit einer Winkelkodierung des Lichtbündels, das die entsprechende Mikrolinse 611 ausstrahlt und das als Gitterpunkt auf dem beleuchteten Objekt dargestellt ist. Diese räumliche Modulation, d.h. die dadurch erzeugte räumliche Kodierung der Gitterpunkte ermöglicht die genaue Identifizierung der einzelnen Strahlenbündel und Gitterpunkte des Beleuchtungsmusters und das Nutzen dieser Information bei der Auswertung der Bildinformationen.

Die Figur 4C zeigt das Ergebnis der räumlichen Modulation mit der verschobenen Mikrolinse 611.

Es kann vorgesehen sein, dass die einzelnen Verschiebungen in einer Vielzahl hexagonal angeordneter Gruppen des Mikrolinsenarrays eine pseudo-statistische Modulation aufweisen, d.h. die Verschiebungen der einzelnen Mikrolinsen bzw. Rasterpunkte pseudozufällig sind. Durch die pseudozufällige Verschiebung können Überschneidungen und Freiräume entstehen. Dabei kann zusätzlich vorgesehen sein, dass der Durchmesser der Linsen 61 an die vorhandenen Freiräume angepasst wird. Auf diese Weise kann eine weitere Modulation beispielsweise durch die Verwendung von zwei bis drei unterschiedlichen Linsendurchmessern erfolgen. Auch asymmetrische Blenden können verwendet werden. Es entsteht ein zusätzliches Merkmal, dass insbesondere bei realen gestörten Objekten die Erkennungsrate steigert.

So wird darauf hingewiesen, dass die Gitterpunkte 61 des Mikrolinsenarrays alternativ oder zusätzlich mindestens eine andere Modulation aufweisen können, beispielsweise eine Größenmodulation und/oder eine Farbmodulation. Eine Größenmodulation kann beispielsweise dadurch erfolgen, dass der Durchmesser der Mikrolinsen 61 z.B. durch entsprechende Vergrößerung der lichtundurchlässigen Schicht zwischen den Linsen verändert wird. Durch die unterschiedlichen Durchmesser ergeben sich unterschiedliche Beleuchtungsstärken für die Strahlen, die zusätzlich ausgewertet werden können. Die Größenmodulation der Mikrolinsen 61 führt somit zu einer Helligkeitsmodulation bei den Gitterpunkten. Eine Farbmodulation kann beispielsweise durch unterschiedliche Farbfilter realisiert werden.

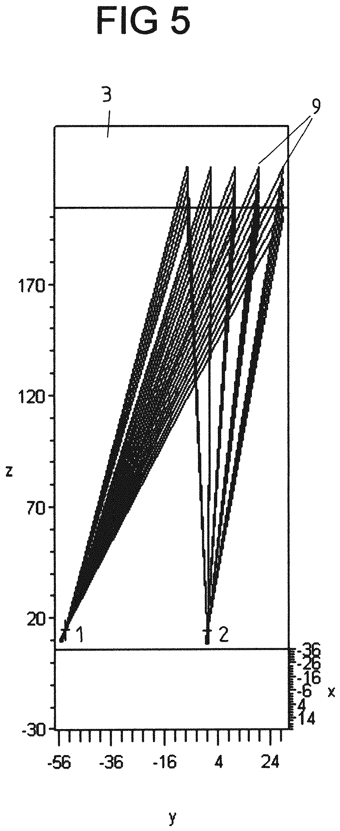

Die Figur 5 zeigt eine Vorrichtung zur Erfassung der dreidimensionalen Form eines Objektes ähnlich der Vorrichtung der Figur 1 in einer dreidimensionalen Ansicht. Die Darstellung erfolgt in der x-y-Ebene und in z-Richtung. Schematisch sind eine Beleuchtungseinrichtung 1 und eine Kamera 2 dargestellt. Die Beleuchtungseinrichtung stellt ein strukturiertes Beleuchtungsmuster bereit, beispielsweise unter Verwendung eines Mikrolinsenarrays gemäß den Figuren 2 bis 4C, das eine Vielzahl von Gitterpunkten 9 auf der Oberfläche eines Objektes 3 aufweist. Die Kamera 2 nimmt das Beleuchtungsmuster auf und erzeugt ein digitales Bild des Beleuchtungsmusters in der Bildebene der Kamera 2.

Die einzelnen Objektgitterpunkte 9 bilden eine Punktmenge, die mit dem Index [i, j] indiziert wird, so dass jeder Gitterpunkt der Punktmenge durch den Index [i, j] eindeutig definiert ist.

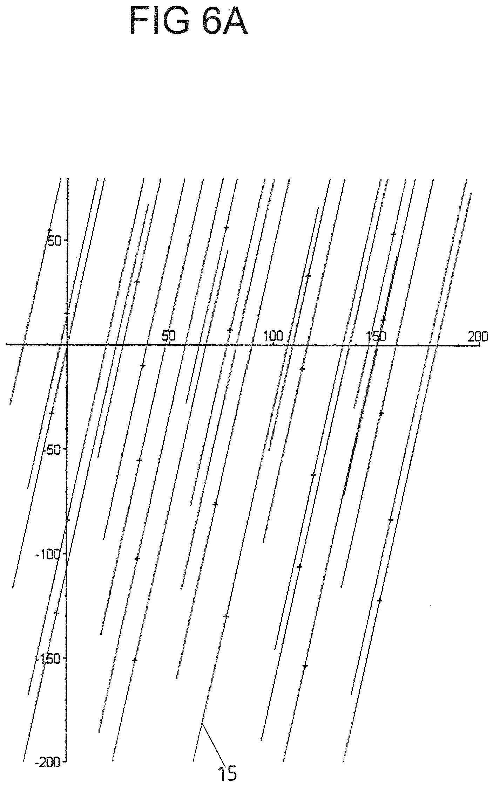

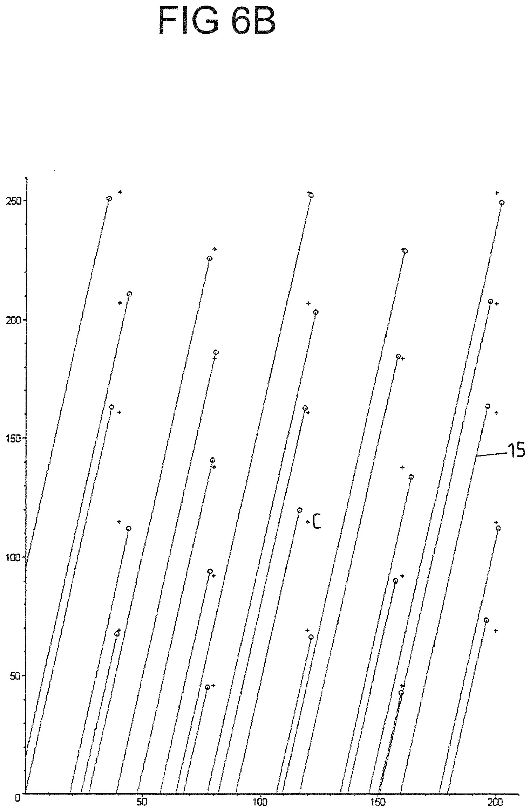

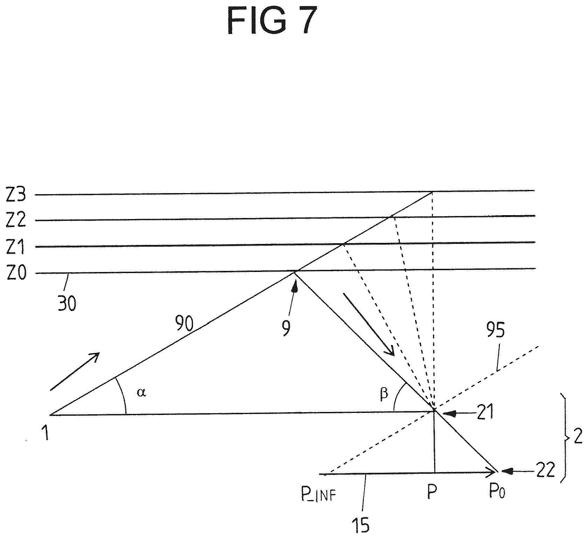

Zur weiteren Erläuterung der Erfindung wird im Folgenden die Definition von Epipolarlinien anhand der Figuren 6A, 6B und 7 erläutert. Die Figur 7 betrachtet die Situation, dass in einer Anordnung gemäß der Figur 5 der Abstand in z-Richtung des Objektes 3 variiert wird, d.h. der Abstand der mit dem Beleuchtungsmuster beleuchteten Fläche 30 des Objektes 3 zur Beleuchtungseinrichtung 1 und zur Kamera 2 verändert wird.

Im Folgenden sei zunächst angenommen, dass sich die Oberfläche 30 des Objektes in der Ebene Z0 befindet. Ein von der Beleuchtungseinrichtung 1 ausgestrahltes Strahlenbündel 90 erzeugt einen Gitterpunkt 9 auf der Oberfläche 30. Ein Teil des Lichtes wird in Richtung der Kamera 2 abgestrahlt. Nach Durchlaufen einer schematisch dargestellten Optik 21 der Kamera 2 wird der Gitterpunkt 9 auf einen Bildpunkt P in der Bildebene 22 der Kamera 2 abgebildet. Der Bildpunkt, dem ein Gitterpunkt zugeordnet ist, der auf der in dem geringsten Abstand angeordneten Ebene Z0 liegt, wird dabei als P0 bezeichnet.

Wenn nun die Fläche 30 ihren Abstand zu der Beleuchtungseinrichtung 1 und der Kamera 2 verändert, indem die Distanz in z-Richtung erhöht wird (entsprechend den Ebenen Z1, Z2, Z3), wandert der Bildpunkt auf einer Linie nach links. Es entsteht dabei eine digitale Strecke, eine sogenannte Epipolarlinie 15. Der Endpunkt der Epipolarlinie ist der Punkt P_{_INF}, der für eine Reflektion an einer unendlich entfernten Ebene steht, wie durch die gepunktete Linie 95 angedeutet ist.

Eine Epipolarlinie 15 gibt somit die Wanderung eines Bildgitterpunktes in der Bildebene 22 bei einer solchen Abstandsänderung wieder.

Bei Betrachtung einer Vielzahl von Epipolarlinien ergibt sich ein in den Figuren 6A, 6B beispielhaft dargestelltes Muster von Epipolarlinien 15 in der Bildebene 22 der Kamera 2. Die Epipolarlinien 15 sind dabei im Rahmen einer initialen Kalibrierung der Kamera 2 vorab zu berechnen und abzuspeichern.

Es wird darauf hingewiesen, dass die ideale Form einer Epipolarlinie eine gerade Strecke ist. In der Praxis ist jedoch eine Verzeichnung der Objektive zu berücksichtigen. Die Form der Epipolarlinien ist daher in den meisten Fällen leicht gekrümmt. Für die Prinzipien der vorliegenden Erfindung ist dies jedoch ohne Bedeutung und wird durch individuelle Parameter für jede Epipolarlinie ausgeglichen.

Für den theoretischen Fall, dass das Kameraobjektiv keinerlei Abbildungsfehler besitzt, die Beleuchtungseinrichtung 1 stets unter exakt identischen Bedingungen Licht abstrahlt und kein Rauschen vorliegt, würde ein Bildgitterpunkt in der Bildebene 22 der Kamera, der einem betrachteten Gitterpunkt des Beleuchtungsmusters auf dem Objekt entspricht, exakt auf einer der zuvor berechneten und abgespeicherten Epipolarlinien 15 liegen. Ein solcher idealisierter Zustand ist in der Figur 6A dargestellt: die einzelnen Kreuze zeigen die "idealen" Positionen der Bildgitterpunkte jeweils auf einer Epipolarlinie.

Die Lage des Punktes auf der Epipolarlinie gibt für diesen Fall unmittelbar die Raumkoordinate des Gitterpunktes in z-Richtung an, da jedem Punkt P auf der Epipolarlinie 15 zwischen den Endpunkten P₀ und P_{_INF} der Epipolarlinie eine bestimmte Raumkoordinate (im betrachteten Beispiel eine bestimmte z-Koordinate) zugeordnet ist.

In einem realen Abbildungssystem mit Abbildungsfehlern, Rauschen, etc. wird ein Bildgitterpunkt in der Bildebene 22 der Kamera 2 jedoch nicht exakt auf einer Epipolarlinie liegen, und falls dies doch der Fall sein sollte, so wäre unklar, ob dies zufällig der Fall ist oder weil der Bildgitterpunkt auf der "richtigen" Epipolarlinie liegt, d.h. derjenigen Epipolarlinie, die die Wanderung des dem Bildgitterpunkt zugeordneten Objektgitterpunktes angibt. Diese verrauschte reale Situation zeigt die Figur 6B. In der Figur 6B sind eine Vielzahl von Bildgitterpunkten C, die nicht auf einer Epipolarlinie 15 liegen, in der Bildebene 22 der Kamera 2 dargestellt. Die Bildgitterpunkte C sind jeweils als Kreuze dargestellt.

Dabei wird zu der Figur 6B folgendes angemerkt. Die Figur 6B zeigt ein Beispiel, bei dem das Objekt sich in einem großen Abstand z befindet, so dass die Bildgitterpunkte C nahe den Endpunkten P_{_INF} der Epipolarlinien 15 liegen, die in der Figur 6B durch Kreise dargestellt sind. Dies ist aber nur beispielhaft zu verstehen. Auch bei jedem anderen Abstand z würden sich Bildgitterpunkte C ergeben, die nicht auf einer Epipolarlinie 15 liegen.

Zu einem dieser Bildgitterpunkte C[m, n] soll im Folgenden exemplarisch eine Korrespondenzanalyse aufgezeigt werden, d.h. es soll ermittelt werden, welche Werte von i und j den Indizes m und n zuzuordnen sind.

Es stellt sich in der Situation der Figur 6B die Frage, welche der Epipolarlinien 15 dem betrachteten Bildpunkt C zugeordnet ist. Nach Ermittlung der "richtigen" Epipolarlinie kann dann in einfacher Weise die z-Koordinate des Gitterpunktes ermittelt werden. Hierzu wird beispielsweise der Punkt auf der richtigen Epipolarlinie bestimmt, der dem Bildpunkt C am nächsten ist, und diesem Punkt dann eine Raumkoordinate des zugehörigen Gitterpunktes zugeordnet. In dem für jeden der Bildpunkte eine solche Zuordnung erfolgt, kann die dreidimensionale Form des Objektes ermittelt werden.

Um nun zu einem Bildpunkt C die richtige Epipolarlinie 15 zu ermitteln, werden zunächst eine Mehrzahl möglicher Epipolarlinien festgelegt, die in der Umgebung des Bildpunktes C liegen. Dies kann z.B. durch eine Tabelle im Speicher eines FPGA realisiert werden. Hierzu wird der kürzeste Abstand des Bildgitterpunkts zu einer Mehrzahl benachbarter Epipolarlinien 15 bestimmt und mit einer Abstandsschwelle verglichen, bei deren Überschreiten Epipolarlinien nicht mehr betrachtet werden.

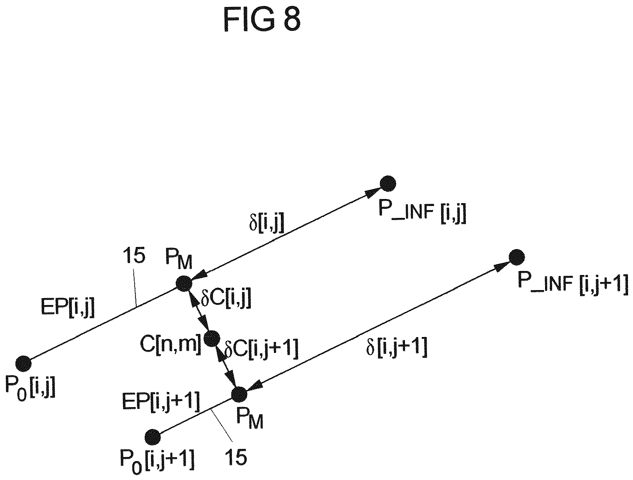

Zu den ausgewählten Epipolarlinien wird jeweils der kürzeste Abstand zum Bildgitterpunkt bestimmt. Die ausgewählten Epipolarlinien werden als Zuordnungskandidaten des Bildgitterpunkts bezeichnet. Dies wird beispielhaft anhand der Figur 8 erläutert, die einen Bildpunkt C[n, m] und zwei diesem benachbarte Epipolarlinien 15 aufweist.

Da jede Epipolarlinie 15 einem Bildgitterpunkt zugeordnet ist, sind die einzelnen Epipolarlinien in der Figur 8 ebenso wie die Punktmenge der Bildgitterpunkte mit einem Index versehen, und zwar entsprechend dem Index [i, j] der Punktmenge der Objektgitterpunkte mit dem Index EP [i, j]. Die beiden Epipolarlinien 15 der Figur 8 werden zur Unterscheidung als EP [i, j] und EP [i, j+1] bezeichnet. Ihnen sind also zwei benachbarte Objektgitterpunkte [i, j] und [i, j+1] zugeordnet.

Weiter weist jede Epipolarlinie 15 wie erläutert zwei Endpunkte P₀ [i,j], P₀ [i,j+1] und P_{_INF} [i,j], P_{_INF} [i,j+1] auf. Bei Bedarf kann ein weiterer Punkt P1[i,j] (nicht dargestellt) verwendet werden, wobei P₀ [i,j] der vorderen und P1[i,j] der hinteren Begrenzung des Messbereichs in der z- Koordinate entspricht. P_{_INF}[i, j] stellt den theoretischen asymptotischen Punkt dar, gegen den die Epipolarlinie für z gegen unendlich konvergiert.

Der Bildgitterpunkt Punkt C[n,m] weist zunächst ein unbekanntes Indexpaar [n,m] auf. Die richtige Position ist genau dann erkannt, wenn n=i und m=j ist. Der Bildgitterpunkt C[n,m] besitzt einen kürzesten Abstand δC [i, j] zu der Epipolarlinie EP [i, j] und einen kürzesten Abstand δC [i, j+1] zu der Epipolarlinie EP [i, j+1]. Es könnte nun daran gedacht werden, sich damit zufrieden zu geben, von den ermittelten kürzesten Abständen δC [i, j] und δC [i, j+1] den kürzesten Abstand zu wählen und die Epipolarlinie mit den kürzesten Abstand als richtige Epipolarlinie zu definieren. Ein solches Vorgehen wäre jedoch potentiell fehlerbehaftet und würde darüber hinaus möglicherweise zu keiner eindeutigen Antwort führen, da (wie in dem Beispiel der Figur 8) der Abstand zu unterschiedlichen Epipolarlinien 15 möglicherweise näherungsweise gleich ist.

Es ist daher vorgesehen, dass zusätzlich Nachbarschaftsinformationen der Gitterpunkte ausgewertet werden, um eine eindeutige Zuordnung eines Bildgitterpunktes zu einer Epipolarlinie bereitzustellen. Diese Auswertung von Nachbarschaftsinformationen kann grundsätzlich auf der Grundlage der kürzesten Abstände δC [i, j] und δC [i, j+1] erfolgen. Bevorzugt wird bei der Auswertung von Nachbarschaftsinformationen jedoch noch ein weiterer Parameter berücksichtigt, und zwar der Parameter δ [i, j], der den Abstand der Projektion P_{M} des Bildgitterpunktes C[m, n] auf die jeweilige Epipolarlinie 15 von dem Grenzpunkt P_{_INF} der jeweiligen Epipolarlinie 15 angibt. Auch dieser Parameter ist in der Figur 8 dargestellt.

Mithin werden die Werte δ [i, j] und δC [i, j] für sämtliche der betrachteten Epipolarlinien EP [i, j] ermittelt. Mit diesen Werten kann für jeden Bildgitterpunkt eine Matrix gebildet werden, die die beiden genannten Parameter enthält. Auf dieser Matrix kann eine Filterung erfolgen, um Epipolarlinien auszusortieren, die eine gewünschte Kontinuitätsbedingung nicht erfüllen. Eine Kontinuitätsbedingung korrespondiert dabei mit dem Vorliegen einer "gutartigen" Fläche, die keine Kanten, Spitzen oder andere Diskontinuitäten enthält.

Eine Voraussetzung dafür, die Epipolarlinie 15 zu finden, die dem Bildgitterpunkt C[n,m] in richtiger Weise zuzuordnen ist, besteht darin, dass die einzelnen Epipolarlinien EP [i, j] eindeutig identifiziert sind. Diese Identifizierung erfolgt unter Berücksichtigung der räumlichen Modulation des Beleuchtungsmusters bei der Kalibrierung. Dies erfolgt beispielsweise in der Art, dass eine räumliche Modulation über die Auswertung von Abstandstabellen zwischen den Gitterpunkten bzw. den Epipolarlinien erkannt wird. Ohne eine solche Identifikation wäre es nicht möglich, einem Punkt P_{M} auf der ausgewählten Epipolarlinie zwingend die richtige Raumkoordinate zuzuordnen, da ohne eine solche Identifizierung nicht sicher wäre, um welche genaue Epipolarlinie es sich handelt.

Die Abstandswerte δC [i, j] und δ [i, j] können wie erläutert in eine mehrdimensionale Matrix aufgenommen werden, die für jeden Bildgitterpunkt C[n,m] die Menge der Zuordnungskandidaten mit dem jeweiligen Index [i,j] und den beiden Abständen δC [i, j] und δ [i, j] enthält. Alternativ enthält die Matrix nur einen der beiden genannten Parameter. Die Matrix kann nun unter Berücksichtigung von Nachbarschaftsinformationen gefiltert werden, um falsche Zuordnungen auszuschließen. Die Filterung kann beispielsweise folgende Kriterien enthalten:
Ein erstes Filterkriterium kann darin bestehen, dass der Abstand δC [i, j] (vgl. Figur 8) für alle betrachteten Epipolarlinien EP [i, j] unter einem Grenzwert liegt: δC [i, j] ≤ G₁.

Ein zweites Filterkriterium kann darin bestehen, dass der Abstand δ [i, j] für alle betrachteten Epipolarlinien EP [i, j] innerhalb des Messbereichs zwischen zₘᵢₙ und zₘₐₓ bzw. δ [i, j]ₘᵢₙ und δ [i, j]ₘₐₓ innerhalb der folgenden Grenzen liegt: δ [i, j] >= G₂ und δ [i, j] ≤ G₃

Die ersten beiden Kriterien unterstützen eine jeweils eindimensionale Filterung; es wird die Zuordnungswahrscheinlichkeit eines Bildgitterpunkt zu jeweils einem Zuordnungskandidaten geprüft.

Eine weitere Filterung kann darin liegen, dass die Zuordnung einer Gruppe benachbarter Bildgitterpunkte zu einer anderen Gruppe benachbarter Epipolarlinien erfolgt. Hierzu wird eine nxn Nachbarschaft untersucht, im Beispiel sei n=2. Für die Nachbarschaft der Bildgitterpunkte {C[n,m], C[n+1,m], C[n,m+1], C[n+1,m+1]} werden sämtliche korrespondierenden Zuordnungskandidaten mit ihren Parametern {[i,j], δC [i, j], δ [i, j]} zu einer Vereinigungsmenge zusammengefasst. Für eine "gutartige" Teilfläche des dreidimensionalen Objekts kann die Nachbarschaft {C[n,m], C[n+1,m], C[n,m+1], C[n+1,m+1]} eindeutig einer Nachbarschaft {[i, j], [i+1,j], [i, j+1], [i+1,j+1]} der Objektgitterpunkte bzw. Indizes der diesen entsprechenden Epipolarlinien zugeordnet werden. D.h. eine korrekt zugeordnete Nachbarschaft besitzt eine konstante Indexdifferenz [n-i, m-j].

Aus der Menge der korrespondierenden Zuordnungskandidaten werden nun zunächst diejenigen zu einer Gruppe zusammengefasst, deren Indexdifferenzen konstant sind. Für jede Gruppe wird anschließend ein Merkmalsvektor bestehend aus der Anzahl der Gruppenelemente, der Standardabweichung (δC [i, j]), der Standardabweichung (δ [i, j]) sowie den entsprechenden Mittelwerten berechnet. Die korrekte Zuordnung zu einer Gruppe ist dann erfüllt, wenn, die Anzahl der Elemente groß ist (im Beispiel 4), wenn die Standardabweichung (δC [i, j]) und die Standardabweichung (δ [i, j]) minimal und der Mittelwert (δC [i, j]) klein sind. Das Ergebnis der Zuordnung wird in eine Zuordnungstabelle eingetragen. Wenn die Nachbarschaft der Bildgitterpunkte bereits eine oder mehrere bekannte Zuordnungen enthält, dann erfolgt eine direkte Vererbung der Indizes. Dieser Algorithmus kann auf einem FPGA umgesetzt werden.

Diese Schwellwerte führen dazu, dass Epipolarlinien und diesen entsprechende Gitterpunkte herausgefiltert werden, die nicht der gleichen zusammenhängenden "gutartigen" Teilfläche des betrachteten dreidimensionalen Objektes zugeordnet sind. Anders ausgedrückt werden Epipolarlinien herausgefiltert, deren zugeordnete Gitterpunkte keine Kontinuitätsbedingung in dem Sinne erfüllen, dass bei geringen Abständen auch nur geringe Höhenunterschiede vorliegen.

Die mehrdimensionale Matrix wird somit gefiltert, so dass falsche Distanzen bzw. die zugehörigen Epipolarlinien aus der Menge der möglichen Epipolarlinien eliminiert werden. Dies erfolgt unter Nutzen der Nachbarschaftsinformationen. Zum Auffinden der regulären Nachbarschaften wird die dem Raster aufgeprägte räumliche Modulation genutzt.

Am Ende dieser Auswertung bleiben ein oder mehrere Epipolarlinien als mögliche "richtige" Epipolarlinien übrig. Zu diesen wird diejenige Epipolarlinie ausgewählt, bei der der Abstand δC [i, j] am kürzesten ist. Auf dieser Epipolarlinien wird der Punkt P_{M} ermittelt, der den Bildpunkt C am nächsten ist, vgl. Fig. 8. Diesem Punkt P_{M} auf der Epipolarlinie wird dann eine Raumkoordinate des zugehörigen Gitterpunktes auf dem Objekt zugeordnet.

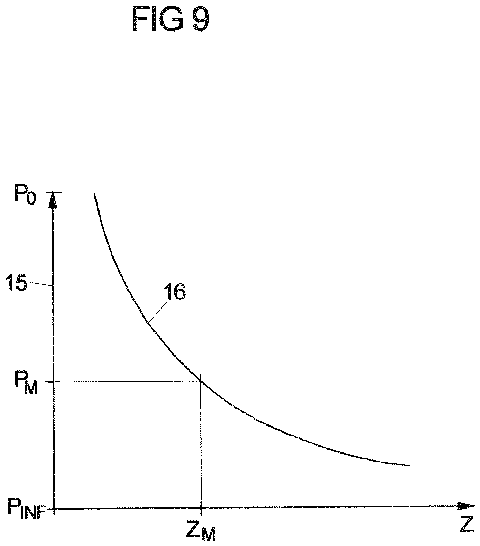

Dies erfolgt entsprechend der Figur 9, die auf der Abszissenachse die Höheninformation z und auf der Ordinatenachse eine Epipolarlinie 15 mit den Endpunkten P_{_INF} und P₀ darstellt. Der Graph 16 wurde bei der Kalibrierung des Systems aufgenommen, so dass über den Wert P_{M} ((entspricht δ [i, j])) unmittelbar die entsprechende Koordinate z_{M} ermittelt werden kann. Der Zusammenhang zwischen der Koordinate z und dem korrespondierenden Abstand δ [i, j] der Fig. 8 kann analytisch durch ein Polynom oder eine Lookup-Tabelle beschrieben werden. Die Parameter findet man z.B. durch einen Bestfitalgorithmus.

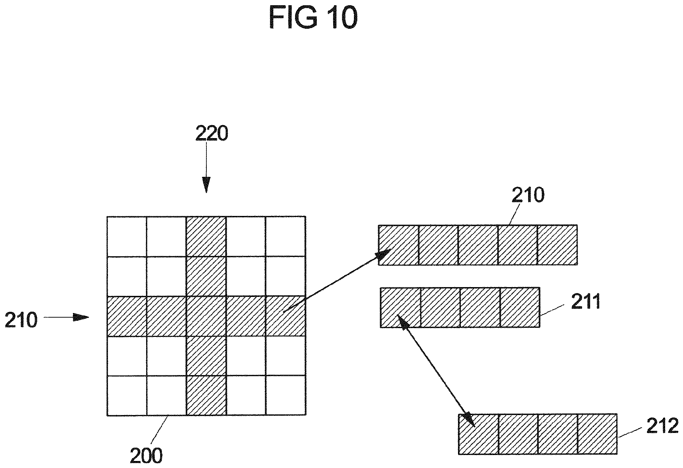

Es wurde bereits erwähnt, dass bei dem beschriebenen Ermitteln der "richtigen" Epipolarlinie eine Schwerpunktbildung der Bildgitterpunkte erfolgt. Eine solche Schwerpunktbildung kann beispielsweise in FPGA im Rahmen einer Streaming-Verarbeitung mit einem Convolver erfolgen, wie im Folgenden anhand der Figur 10 beispielhaft erläutert wird.

Dabei werden in einem ersten Schritt die Strahlen detektiert. Hierzu wird aus dem einlaufenden Bild eine Matrix 200 gebildet, die eine 5x5-Nachbarschaft enthält. Eine solche Matrix 200 wird beispielsweise mittels eines Speichers oder mittels Verzögerungsstrukturen gebildet. Damit entsteht innerhalb des Pixeltaktes eine 5x5-Matrix mit 8 oder 10 oder 12 bit Bilddaten. Aus dieser Matrix werden ein horizontaler und ein vertikaler Scanvektor 210, 220 entnommen. Beide Scanvektoren 210, 220 werden in einen vor- und nachlaufenden Teil getrennt. In der Figur 10 sind beispielhaft der vorlaufende Teil 211 und der nachlaufende Teil 212 des horizontalen Scanvektors 210 dargestellt.

Es wird eine symmetrische Projektion angenommen, bei der die Grauwertverteilung der einzelnen Strahlen näherungsweise einer symmetrischen Gauß-Verteilung entspricht. Das Faltungsintegral der lokalen Umgebung mit einem idealen Modell Grauwertverteilung bildet dann ein lokales Maximum im Zentrum in der Matrix, wobei das Maximum den Schwerpunkt des Bildpunktes darstellt. Die exakte Lage der Nullstelle kann dabei subpixelinterpoliert werden.

Wenn also die Grauwertverteilung mit dem typischen Grauwertverlauf eines Bildgitterpunkts übereinstimmt, dann ergibt die zweidimensionale Faltung ein lokales Maximum. Wenn die Intensität dieses Maximums einen Schwellwert übersteigt, dann wird der Bildgitterpunkt akzeptiert. Die Bildkoordinaten entsprechen der Schwerpunktlage des Bildgitterpunkts, kurz Bildgitterpunkt. Es ist möglich, durch Interpolation die Auflösung der Schwerpunktbestimmung zu erhöhen (bis ca. Pixelabstand/10).

## Patentansprüche

1. Verfahren zur Erfassung der dreidimensionalen Form eines Objekts (3), mit den Schritten:
- Beleuchten des Objektes (3) mittels einer Beleuchtungseinrichtung (1) mit einem Beleuchtungsmuster, das eine Vielzahl von Gitterpunkten (9) aufweist, wobei die Gitterpunkte (9) eine räumliche Modulation aufweisen,
- Aufnehmen des mit dem Beleuchtungsmuster beleuchteten Objekts (3) mit einer Kamera (2), wobei zwischen der Beleuchtungsrichtung der Beleuchtungseinrichtung (1) und der Betrachtungsrichtung der Kamera (2) ein spitzer Winkel besteht,
- Bestimmen der Bildgitterpunkte (C) des beleuchteten Objekts (3) in der Bildebene (22) der Kamera (2), wobei jeder Bildgitterpunkt (C) der Schwerpunkt des durch die Kamera (2) erfassten Bilds eines Gitterpunktes (9) auf dem Objekt (3) ist,
- Zuordnen zu jedem Bildgitterpunkt (C) mindestens einer Raumkoordinate des zugehörigen Gitterpunktes (9) auf dem Objekt (3), wobei das Zuordnen für jeden Bildgitterpunkt (C) umfasst:
∘ Bestimmen genau einer zu dem Bildgitterpunkt benachbarten Epipolarlinie (15) aus einer Mehrzahl von benachbarten Epipolarlinien, die vorberechnet und abgespeichert wurden und die sich ergeben, wenn der Abstand einer mit dem Beleuchtungsmuster beleuchteten Fläche (30) zur Beleuchtungseinrichtung (1) und zur Kamera (2) geändert wird, wobei jede Epipolarlinie (15) die Wanderung eines Bildgitterpunktes bei einer solchen Abstandsänderung in der Bildebene (22) angibt,
∘ wobei das Bestimmen genau einer zu dem Bildgitterpunkt (C) benachbarten Epipolarlinie (15) umfasst:
▪ Bestimmen eines Abstands (δ[i, j]) des Bildgitterpunktes (C) oder der Projektion (P_{M}) des Bildgitterpunktes (C) auf die jeweilige Epipolarlinie (15) zu mindestens einem definierten Punkt (P_{INF}) der Epipolarlinie (15) jeweils für eine Mehrzahl benachbarter Epipolarlinien (15);
▪ Auswahl einer dieser benachbarten Epipolarlinien (15) unter Berücksichtigung der ermittelten Abstände (δ[i, j]), wobei die ermittelten Abstände (δ[i, j]) gefiltert werden, um solche Epipolarlinien (15) auszuschließen, bei denen die ermittelten Abstände unterhalb und/oder oberhalb definierter Grenzwerte (G₁) oder Mittelwerte und/oder außerhalb definierter Intervalle (G₂, G₃) liegen,
▪ wobei als Abstände der Abstand des Bildgitterpunktes (C) zu dem jeweiligen Grenzpunkt (P_{_INF}) der jeweiligen benachbarten Epipolarlinien (15) oder der Abstand (δ[i, j]) der Projektion des Bildgitterpunktes auf die jeweilige benachbarte Epipolarlinie zu dem jeweiligen Grenzpunkt (P_{_INF}) der jeweiligen benachbarten Epipolarlinien (15) bestimmt und dahingehend gefiltert werden, dass solche Epipolarlinien bei der Bestimmung ausgeschlossen werden, bei denen der genannte Abstand (δ[i, j]) zum Grenzpunkt (P_{_INF}) der Epipolarlinie (15) nicht innerhalb eines definierten Intervalls (G₂, G₃) oder unterhalb eines Grenzwertes liegt;
∘ auf der ausgewählten Epipolarlinie (15) Bestimmen des Punktes (P_{M}) auf der Epipolarlinie, die dem Bildgitterpunkt am nächsten ist,
∘ Zuordnen einer Raumkoordinate des zugehörigen Gitterpunktes (9) auf dem Objekt (3) zu diesem Punkt (P_{M}) auf der Epipolarlinie (15), wobei die Raumkoordinate durch den bestimmten Punkt (P_{M}) festgelegt ist; und
- Bestimmen mindestens eines Parameters der dreidimensionalen Form des Objekts (3) aus den ermittelten Raumkoordinaten.

2. Verfahren nach Anspruch 1, **dadurch gekennzeichnet, dass** die einem Gitterpunkt (9) zugeordnete Raumkoordinate eine Distanzinformation angibt, insbesondere die Höhe des jeweiligen Gitterpunktes (9) bezogen auf eine Referenzfläche (4).

3. Verfahren nach Anspruch 1 oder 2, **dadurch gekennzeichnet, dass** die räumliche Modulation der Gitterpunkte (9) des Beleuchtungsmusters eine pseudostatistische Modulation aufweist.

4. Verfahren nach einem der vorangehenden Ansprüche, **dadurch gekennzeichnet, dass** die Gitterpunkte (9) des Beleuchtungsmusters ein hexagonales Raster bilden, wobei die Modulation der Gitterpunkte (9) durch räumliches Verschieben jeweils mindestens eines Gitterpunktes in einem Sechseck des hexagonalen Rasters bereitgestellt wird.

5. Verfahren nach einem der vorangehenden Ansprüche, **dadurch gekennzeichnet, dass** die Filterung der ermittelten Abstände (δ[i, j],) dahingehend erfolgt, dass eine Kontinuitätsbedingung erfüllt wird, die besagt, dass in der Bildebene (22) benachbarte Bildgitterpunkte (C) mindestens eine ähnliche Raumkoordinate (z) im Objektraum aufweisen.

6. Verfahren nach einem der vorangehenden Ansprüche, **dadurch gekennzeichnet, dass** des Weiteren mindestens ein kürzester Abstand (δC[i, j]) des Bildgitterpunktes (C) zu der Epipolarlinie (15) für eine Mehrzahl benachbarter Epipolarlinien (15) bestimmt wird, wobei diese Abstände (δC[i, j]) ebenfalls gefiltert werden, um solche Epipolarlinien (15) auszuschließen, bei denen die ermittelten Abstände unterhalb und/oder oberhalb definierter Grenzwerte (G₁) oder Mittelwerte und/oder außerhalb definierter Intervalle (G₂, G₃) liegen.

7. Verfahren nach einem der vorangehenden Ansprüche, **dadurch gekennzeichnet, dass** bei der Filterung der ermittelten Abstände (δC[i, j], δ[i, j],) Nachbarschaftsinformationen berücksichtigt werden dahingehend, dass nur solche Zuordnungen gültig sind, bei denen die Indexdifferenz [m-i, m-j] in einer betrachteten Nachbarschaft konstant ist.

8. Verfahren nach einem der Ansprüche 6 bis 7 **dadurch gekennzeichnet, dass** den Epipolarlinien (15) jeweils Daten zum Abstand (δC[i, j]) des Bildgitterpunkts zu den Epipolarlinien (15) und/oder Daten zum Abstand des Bildgitterpunkts zum Grenzpunkt (P_{_INF}) der Epipolarlinien (15) und/oder Daten zum Abstand (δ[i, j]) der Projektion des Bildgitterpunktes auf die jeweilige Epipolarlinie zu dem jeweiligen Grenzpunkt (P_{_INF}) der Epilolarlinien zugeordnet und die Zuordnungen in einer Tabelle oder Matrix gespeichert werden.

9. Verfahren nach Anspruch 8 **dadurch gekennzeichnet, dass** die in der Tabelle oder Matrix gespeicherten Daten in Echtzeit in einem FPGA-Baustein verarbeitet werden.

10. Verfahren nach einem der vorangehenden Ansprüche, **dadurch gekennzeichnet, dass** beim Bestimmen genau einer zu dem Schwerpunkt benachbarten Epipolarlinie (15) aus einer Mehrzahl von benachbarten Epipolarlinien solche benachbarten Epipolarlinien betrachtet werden, bei denen der kürzeste Abstand (δC[i, j]) des Schwerpunkts unterhalb eines vorgegebenen Schwellwerts liegt.

11. Verfahren nach einem der vorangehenden Ansprüche, **dadurch gekennzeichnet, dass** das Beleuchtungsmuster durch ein Mikrolinsenarray (60) erzeugt wird, das mit Licht eines Projektors (1) bestrahlt wird, wobei die Mikrolinsen (61) des Mikrolinsenarray (60) eine räumliche Modulation aufweisen.

12. Verfahren nach Anspruch 11, soweit rückbezogen auf Anspruch 4, **dadurch gekennzeichnet, dass** die Mikrolinsen (61) des Mikrolinsenarray (60) in einem hexagonalen Raster angeordnet sind und eine räumliche Modulation des Mikrolinsenarrays (60) dahingehend vorliegt, dass die Lage der optischen Achse mindestens einer Mikrolinse (61) einer hexagonal angeordneten Gruppe in Umfangsrichtung oder in radialer Richtung bezogen auf den Schwerpunkt der Gruppe verschoben ist.

13. 44- Verfahren nach einem der vorangehenden Ansprüche, **dadurch gekennzeichnet, dass** die Gitterpunkte (9) des Beleuchtungsmusters mindestens eine zusätzliche Modulation aufweisen, insbesondere eine Helligkeitsmodulation und/oder eine Größenmodulation.

14. Vorrichtung zur Erfassung der dreidimensionalen Form eines Objekts, die aufweist:
- eine Beleuchtungseinrichtung (1) zum Beleuchten des Objektes (3) mit einem Beleuchtungsmuster, wobei das Beleuchtungsmuster eine Vielzahl von Gitterpunkten (9) aufweist, die eine räumliche Modulation aufweisen,
- eine Kamera (2) zum Aufnehmen des mit dem Beleuchtungsmuster beleuchteten Objekts (3), wobei zwischen der Beleuchtungsrichtung der Beleuchtungseinrichtung (1) und der Betrachtungsrichtung der Kamera (2) ein spitzer Winkel besteht,
- Mittel (7) zum Bestimmen der Bildgitterpunkte (C) des beleuchteten Objekts (3) in der Bildebene (22) der Kamera (2), wobei jeder Bildgitterpunkt (C) der Schwerpunkt des durch die Kamera (2) erfassten Bilds eines Gitterpunktes (9) auf dem Objekt (3) ist,
- Speichermittel (7) zum Speichern von vorberechneten Epipolarlinien (15), die sich ergeben, wenn der Abstand einer mit dem Beleuchtungsmuster beleuchteten Fläche (30) zur Beleuchtungseinrichtung (1) und zur Kamera (2) geändert wird, wobei jede Epipolarlinie (15) die Wanderung eines Bildgitterpunktes (C) bei einer solchen Abstandsänderung in der Bildebene (22) angibt,
- Zuordnungsmittel (7) zum Zuordnen zu jeden Bildgitterpunkt (C) mindestens einer Raumkoordinate des zugehörigen Gitterpunktes (9) auf dem Objekt, wobei die Zuordnungsmittel für jeden Bildgitterpunkt (C) umfassen:
∘ Mittel (7) zum Bestimmen genau einer zu dem Bildgitterpunkt benachbarten Epipolarlinie (15) aus einer Mehrzahl von benachbarten Epipolarlinien, die vorberechnet und in den Speichermitteln (7) gespeichert wurden, wobei die Mittel zum Bestimmen genau einer zu dem Bildgitterpunkt benachbarten Epipolarlinie (15) umfassen:
▪ Mittel (7) zum Bestimmen eines Abstands (δ[i, j]) des Bildgitterpunktes (C) oder der Projektion (P_{M}) des Bildgitterpunktes (C) auf die jeweilige Epipolarlinie (15) zu mindestens einem definierten Punkt (P_{INF}) der Epipolarlinie (15) jeweils für eine Mehrzahl benachbarter Epipolarlinien (15);
▪ Mittel (7) zum Auswählen einer dieser benachbarten Epipolarlinien (15) unter Berücksichtigung der ermittelten Abstände (δ[i, j], wobei die ermittelten Abstände (δ[i, j]) gefiltert werden, um solche Epipolarlinien (15) auszuschließen, bei denen die ermittelten Abstände unterhalb und/oder oberhalb definierter Grenzwerte (G₁) oder Mittelwerte und/oder außerhalb definierter Intervalle (G₂, G₃) liegen,
▪ wobei die Mittel (7) zum Bestimmen eines Abstands als Abstände den Abstand des Bildgitterpunktes (C) zu dem jeweiligen Grenzpunkt (P_{_INF}) der jeweiligen benachbarten Epipolarlinien (15) oder den Abstand (δ[i, j]) der Projektion des Bildgitterpunktes auf die jeweilige benachbarten Epipolarlinie zu dem jeweiligen Grenzpunkt (P_{_JNF}) der jeweiligen benachbarten Epipolarlinien (15) bestimmen und die Mittel (7) zum Auswählen einer dieser benachbarten Epipolarlinien (15) diese Abstände dahingehend filtern, dass solche Epipolarlinien bei der Bestimmung ausgeschlossen werden, bei denen der genannte Abstand (δ[i, j]) zum Grenzpunkt (P_{_INF}) der Epipolarlinie (15) nicht innerhalb eines definierten Intervalls (G₂, G₃) oder unterhalb eines Grenzwertes liegt;
∘ Mittel (7) zum Bestimmen des Punktes (P_{M}) auf der ausgewählten Epipolarlinie (i, j), die dem Bildgitterpunkt am nächsten ist,
∘ Mittel (7) zum Zuordnen einer Raumkoordinate des zugehörigen Gitterpunktes (9) auf dem Objekt (3) zu diesem Punkt (P_{M}) auf der Epipolarlinie, wobei die Raumkoordinate durch den bestimmten Punkt festgelegt ist, und
- Mittel (7) zum Bestimmen mindestens eines Parameters der dreidimensionalen Form des Objekts (3) aus den ermittelten Raumkoordinaten.

## Claims

1. Method for capturing the three-dimensional form of an object (3), including the steps of:
- illuminating the object (3) by means of an illumination device (1) with an illumination pattern that has a multiplicity of mesh points (9), wherein the mesh points (9) have a spatial modulation,
- recording the object (3) that is illuminated with the illumination pattern using a camera (2), wherein there is an acute angle between the illumination direction of the illumination device (1) and the observation direction of the camera (2),
- determining the image mesh points (C) of the illuminated object (3) in the image plane (22) of the camera (2), wherein each image mesh point (C) is the centroid of the image that is captured by the camera (2) of a mesh point (9) on the object (3),
- assigning to each image mesh point (C) at least one spatial coordinate of the associated mesh point (9) on the object (3), wherein assigning for each image mesh point (C) includes:
∘ determining exactly one epipolar line (15) adjacent to the image mesh point from a plurality of adjacent epipolar lines, which were calculated in advance and stored and which emerge when the distance from the illumination device (1) and from the camera (2) of an area (30) illuminated by the illumination pattern changes, wherein each epipolar line (15) specifies the migration of an image mesh point in the case of such a change in distance in the image plane (22),
∘ wherein determining exactly one epipolar line (15) adjacent to the image mesh point (C) includes:
▪ determining a distance (δ[i, j]) of the image mesh point (C) or of the projection (P_{M}) of the image mesh point (C) on the respective epipolar line (15) from at least one defined point (P_{INF}) on the epipolar line (15), in each case for a plurality of adjacent epipolar lines (15) ;
▪ selecting one of these adjacent epipolar lines (15) taking account of the ascertained distances (δ[i, j]), wherein the ascertained distances (δ[i, j]) are filtered in order to exclude those epipolar lines (15) where the ascertained distances lie below and/or above defined limits (G₁) or mean values and/or lie outside of defined intervals (G₂, G₃),
▪ wherein the distance of the image mesh point (C) to the respective limiting point (P_{_INF}) of the respective adjacent epipolar lines (15) or the distance (δ[i, j]) of the projection of the image mesh point on the respective adjacent epipolar line to the respective limiting point (P_{_INF}) of the respective adjacent epipolar lines (15) are determined as distances and filtered to the effect of excluding those epipolar lines during the determination where the aforementioned distance (δ[i, j]) to the limiting point (P_{_INF}) of the epipolar line (15) does not lie within a defined interval (G₂, G₃) or below a threshold;
∘ determining, on the selected epipolar line (15), the point (P_{M}) on the epipolar line closest to the image mesh point,
∘ assigning a spatial coordinate of the assigned mesh point (9) on the object (3) to this point (P_{M}) on the epipolar line (15), wherein the spatial coordinate is set by the determined point (P_{M}); and
- determining at least one parameter of the three-dimensional form of the object (3) from the ascertained spatial coordinates.

2. Method according to Claim 1, **characterized in that** the spatial coordinate assigned to a mesh point (9) specifies a distance information item, in particular the height of the respective mesh point (9) in relation to a reference area (4).

3. Method according to Claim 1 or 2, **characterized in that** the spatial modulation of the mesh points (9) of the illumination pattern has a pseudo-statistic modulation.

4. Method according to any one of the preceding claims, **characterized in that** the mesh points (9) of the illumination pattern form a hexagonal grid, wherein the modulation of the mesh points (9) is provided by a spatial displacement of respectively at least one mesh point in a hexagon of the hexagonal grid.

5. Method according to any one of the preceding claims, **characterized in that** the ascertained distances (δ[i, j]) are filtered to the effect of satisfying a continuity condition which states that image mesh points (C) that are adjacent in the image plane (22) have an at least similar spatial coordinate (z) in the object space.

6. Method according to any one of the preceding claims, **characterized in that**, furthermore, at least one shortest distance (δC[i, j]) of the image mesh point (C) to the epipolar line (15) is determined for a plurality of adjacent epipolar lines (15), wherein these distances (δC[i, j]) are likewise filtered in order to exclude those epipolar lines (15) where the ascertained distances lie below and/or above defined limits (G₁) or mean values and/or outside of defined intervals (G₂, G₃).

7. Method according to any one of the preceding claims, **characterized in that**, when filtering the ascertained distances (δC[i, j], δ[i, j]), neighbourhood information items to the effect of considering valid only those assignments in which the index difference [m-i, m-j] is constant in a considered neighbourhood are taken into account.

8. Method according to either of Claims 6 and 7, **characterized in that** data relating to the distance (δC[i, j]) of the image mesh point from the epipolar lines (15) and/or data relating to the distance of the image mesh point from the limiting point (P_{_INF}) of the epipolar lines (15) and/or data relating to the distance (δ[i, j]) of the projection of the image mesh point on the respective epipolar line from the respective limiting point (P_{_INF}) of the epipolar lines is assigned to the epipolar lines (15) in each case and the assignments are stored in a table or matrix.

9. Method according to Claim 8, **characterized in that** the data stored in the table or matrix are processed in real-time in an FPGA component.

10. Method according to any one of the preceding claims, **characterized in that** those adjacent epipolar lines in which the shortest distance (δC[i, j]) from the centroid lies below a predetermined threshold are considered when determining exactly one epipolar line (15) adjacent to the centroid from a plurality of adjacent epipolar lines.

11. Method according to any one of the preceding claims, **characterized in that** the illumination pattern is produced by a microlens array (60) that is irradiated by light of a projector (1), wherein the microlenses (61) of the microlens array (60) have a spatial modulation.

12. Method according to Claim 11, provided there is a dependency reference to Claim 4, **characterized in that** the microlenses (61) of the microlens array (60) are arranged in a hexagonal grid and there is a spatial modulation of the microlens array (60) to the effect of the position of the optical axis of at least one microlens (61) of a group arranged in hexagonal fashion being displaced in the circumferential direction or in the radial direction in relation to the centroid of the group.

13. Method according to any one of the preceding claims, **characterized in that** the mesh points (9) of the illumination pattern have at least one additional modulation, in particular a brightness modulation and/or a size modulation.

14. Apparatus for capturing the three-dimensional form of an object, said apparatus having:
- an illumination device (1) for illuminating the object (3) with an illumination pattern, wherein the illumination pattern has a multiplicity of mesh points (9) that have a spatial modulation,
- a camera (2) for recording the object (3) illuminated with the illumination pattern, wherein there is an acute angle between the illumination direction of the illumination device (1) and the observation direction of the camera (2),
- means (7) for determining the image mesh points (C) of the illuminated object (3) in the image plane (22) of the camera (2), wherein each image mesh point (C) is the centroid of the image that is captured by the camera (2) of a mesh point (9) on the object (3),
- storage means (7) for storing precalculated epipolar lines (15) that emerge when the distance from the illumination device (1) and from the camera (2) of an area (30) illuminated by the illumination pattern changes, wherein each epipolar line (15) specifies the migration of an image mesh point (C) in the case of such a change in distance in the image plane (22),
- assignment means (7) for assigning to each image mesh point (C) at least one spatial coordinate of the associated mesh point (9) on the object, wherein the assignment means for each image mesh point (C) comprise:
∘ means (7) for determining exactly one epipolar line (15) adjacent to the mesh grid point from a plurality of adjacent epipolar lines that were calculated in advance and stored in the storage means (7), wherein the means for determining exactly one epipolar line (15) adjacent to the mesh grid point comprise:
▪ means (7) for determining a distance (δ[i, j]) of the image mesh point (C) or of the projection (P_{M}) of the image mesh point (C) on the respective epipolar line (15) from at least one defined point (P_{INF}) on the epipolar line (15), in each case for a plurality of adjacent epipolar lines (15);
▪ means (7) for selecting one of these adjacent epipolar lines (15) taking account of the ascertained distances (δ[i, j]), wherein the ascertained distances (δ[1, j]) are filtered in order to exclude those epipolar lines (15) where the ascertained distances lie below and/or above defined limits (G₁) or mean values and/or lie outside of defined intervals (G₂, G₃),
▪ wherein the means (7) for determining a distance determine the distance of the image mesh point (C) to the respective limiting point (P_{_INF}) of the respective adjacent epipolar lines (15) or the distance (δ[i, j]) of the projection of the image mesh point on the respective adjacent epipolar line to the respective limiting point (P_{_INF}) of the respective adjacent epipolar lines (15) as distances and the means (7) for selecting one of these adjacent epipolar lines (15) filter these distances to the effect of excluding those epipolar lines during the determination where the aforementioned distance (δ[i, j]) to the limiting point (P_{_INF}) of the epipolar line (15) does not lie within a defined interval (G₂, G₃) or below a threshold;
∘ means (7) for determining the point (P_{M}) on the selected epipolar line (i, j) that is closest to the image mesh point,
∘ means (7) for assigning a spatial coordinate of the associated mesh point (9) on the object (3) to this point (P_{M}) on the epipolar line, wherein the spatial coordinate is set by the determined point, and
- means (7) for determining at least one parameter of the three-dimensional form of the object (3) from the ascertained spatial coordinates.

## Revendications

1. Procédé destiné à détecter la forme tridimensionnelle d'un objet (3), comportant les étapes :
- de l'éclairage de l'objet (3) au moyen d'un système d'éclairage (1) avec un modèle d'éclairage qui comporte une pluralité de points de trame (9), les points de trame (9) présentant une modulation spatiale,
- de l'enregistrement à l'aide d'une caméra (2) de l'objet (3) éclairé avec le modèle d'éclairage, sachant qu'un angle aigu se trouve entre la direction d'éclairage du système d'éclairage (1) et la direction d'observation de la caméra (2),
- de la détermination des points de trame d'image (C) de l'objet (3) éclairé dans le plan d'image (22) de la caméra (2), sachant que chaque point de trame d'image (C) est le point focal de l'image détectée par la caméra (2) d'un point de trame (9) sur l'objet (3),
- de l'association à chaque point de trame d'image (C) d'au moins une coordonnée spatiale du point de trame (9) correspondant sur l'objet (3), sachant que l'association comprend, pour chaque point de trame d'image (C) :
∘ la détermination de précisément une ligne épipolaire voisine (15) du point de trame d'image, parmi une pluralité de lignes épipolaires voisines, qui ont été pré-calculées et mémorisées et qui résultent lorsqu'on modifie l'écart entre une surface (30) éclairée selon le modèle d'éclairage et le système d'éclairage (1) et la caméra (2), sachant que chaque ligne épipolaire (15) indique la migration d'un point de trame d'image lors d'une telle modification d'écart dans le plan d'image (22),
∘ la détermination de précisément une ligne épipolaire voisine (15) du point de trame d'image (C) comprenant :
• la détermination d'un écart (δ[i, j]) du point de trame d'image (C) ou de la projection (P_{M}) du point de trame d'image (C) sur la ligne épipolaire (15) respective par rapport à au moins un point défini (P_{INF}) de la ligne épipolaire (15), chaque fois pour une pluralité de lignes épipolaires voisines (15) ;
• le choix de l'une desdites lignes épipolaires voisines (15) en considérant les écarts (δ[i, j]) déterminés, sachant que les écarts (δ[1, j]) écarts déterminés sont filtrés, pour exclure les lignes épipolaires (15) pour lesquelles les écarts déterminés sont inférieurs et/ou supérieurs à des valeurs limites (G₁) ou valeurs moyennes définies et/ou se situent à l'extérieur à d'intervalles définis (G₂, G₃),
• étant déterminés en tant qu'écarts l'écart entre le point de trame d'image (C) et le point limite (P_{_INF}) respectif des lignes épipolaires voisines (15) respectives ou l'écart (δ[i, j]) de la projection du point de trame d'image sur la ligne épipolaire voisine respective par rapport au point limite (P_{_INF}) respectif des lignes épipolaires voisines (15) respectives et ceux-ci étant filtrés de telle sorte que les lignes épipolaires pour lesquelles l'écart (δ[i, j]) cité par rapport au point limite (P_{_INF}) de la ligne épipolaire (15) ne se situe pas dans un intervalle défini (G₂, G₃) ou est inférieur à une valeur limite soient exclues lors de la détermination ;
∘ sur la ligne épipolaire (15) choisie, la détermination du point (P_{M}) sur la ligne épipolaire qui est la plus proche du point de trame d'image,
∘ l'association d'une coordonnée spatiale du point de trame (9) correspondant sur l'objet (3) audit point (P_{M}) sur la ligne épipolaire (15), sachant que la coordonnée spatiale est fixée par le point déterminé (P_{M}) ; et
- de la détermination d'au moins un paramètre de la forme tridimensionnelle de l'objet (3) parmi les coordonnées spatiales déterminées.

2. Procédé selon la revendication 1, **caractérisé en ce que** la coordonnée spatiale associée à un point de trame (9) donne une information de distance, notamment la hauteur du point de trame (9) respectif en rapport à une surface de référence (4).

3. Procédé selon la revendication 1 ou 2, **caractérisé en ce que** la modulation spatiale des points de trame (9) du modèle d'éclairage comporte une modulation pseudo-statistique.

4. Procédé selon l'une quelconque des revendications précédentes, **caractérisé en ce que** les points de trame (9) du modèle d'éclairage forment une grille hexagonale, la modulation des points de trame (9) étant mise à disposition par déplacement dans l'espace de chaque fois au moins un point de trame dans un hexagone de la grille hexagonale.

5. Procédé selon l'une quelconque des revendications précédentes, **caractérisé en ce que** le filtrage des écarts (δ[i, j]) s'effectue de sorte à satisfaire une condition de continuité qui dit que des points de trame d'image (C) voisins dans le plan d'image (22) comportent au moins une coordonnée spatiale (z) analogue dans l'espace de l'objet.

6. Procédé selon l'une quelconque des revendications précédentes, **caractérisé en ce que** par ailleurs, au moins un écart le plus court (δC[i, j]) entre le point de trame d'image (C) et la ligne épipolaire (15) est déterminé pour une pluralité de lignes épipolaires voisines (15), sachant que ces écarts (δC[i, j]) sont également filtrés pour exclure les lignes épipolaires (15) pour lesquelles les écarts déterminés sont inférieurs et/ou supérieurs à des valeurs limites (G₁) ou valeurs moyennes définies et/ou se situent à l'extérieur d'intervalles définis (G₂, G₃).

7. Procédé selon l'une quelconque des revendications précédentes, **caractérisé en ce que** lors du filtrage des écarts (δC[i, j], δ[i, j],) déterminés, des informations de voisinages sont prises en considération de telle sorte que ne sont valables que de telles associations pour lesquelles la différence d'indice [m-i, m-j] est constante dans un voisinage considéré.

8. Procédé selon l'une quelconque des 6 à 7, **caractérisé en ce qu'**aux lignes épipolaires (15) sont associées à chaque fois des données concernant l'écart (δC[i, j]) entre le point de trame d'image et les lignes épipolaires (15) et/ou des données concernant l'écart entre le point de trame d'image et le point limite (P_{_INF}) des lignes épipolaires (15) et/ou des données concernant l'écart (δ[i, j]) de la projection du point de trame d'image sur la ligne épipolaire respective par rapport au point limite (P_{_INF}) respectif des lignes épipolaires et les associations sont sauvegardées dans un tableau ou une matrice.

9. Procédé selon la revendication 8, **caractérisé en ce que** les données mémorisées dans le tableau ou dans la matrice sont traitées ultérieurement en temps réel dans un module FPGA.

10. Procédé selon l'une quelconque des revendications précédentes, **caractérisé en ce que** lors de la détermination de précisément une ligne épipolaire voisine (15) du point de focus parmi une pluralité de lignes épipolaires voisines, sont prises en considération les lignes épipolaires voisines pour lesquelles l'écart le plus court (δC[i, j]) par rapport au point focal est inférieur à une valeur seuil prédéfinie.

11. Procédé selon l'une quelconque des revendications précédentes, **caractérisé en ce que** le modèle d'éclairage est créé par un réseau de microlentilles (60) qui est irradié par la lumière d'un projecteur (1), les microlentilles (61) du réseau de microlentilles (60) présentant une modulation spatiale.

12. Procédé selon la revendication 11, dans la mesure où elle fait référence à la revendication 4, **caractérisé en ce que** les microlentilles (61) du réseau de microlentilles (60) sont placées dans une grille hexagonale et qu'il existe une modulation spatiale du réseau de microlentilles (60) **en ce que** la position de l'axe optique d'au moins une microlentille (61) d'un groupe placé en forme hexagonale est déplacée dans la direction périphérique ou dans la direction radiale par rapport au point focal du groupe.

13. Procédé selon l'une quelconque des revendications précédentes, **caractérisé en ce que** les points de trame (9) du modèle d'éclairage présentent au moins une modulation supplémentaire, notamment une modulation de luminosité et/ou une modulation de grandeur.

14. Dispositif destiné à détecter la forme tridimensionnelle d'un objet, qui comporte :
- un système d'éclairage (1) destiné à éclairer l'objet (3) avec un modèle d'éclairage, le modèle d'éclairage comportant une pluralité de points de trame (9) qui présentent une modulation spatiale,
- une caméra (2) destinée à enregistrer l'objet (3) éclairé par le modèle d'éclairage, sachant qu'un angle aigu se trouve entre la direction d'éclairage du système d'éclairage (1) et la direction d'observation de la caméra (2),
- des moyens (7) destinés à déterminer les points de trame d'image (C) de l'objet (3) éclairé dans le plan d'image (22) de la caméra (2), sachant que chaque point de trame d'image (C) est le point focal de l'image détectée par la caméra (2) d'un point de trame (9) sur l'objet (3),
- des moyens de mémorisation (7) destinés à mémoriser des lignes épipolaires (15) pré-calculées, qui résultent lorsqu'on modifie l'écart entre une surface (30) éclairée par le modèle d'éclairage et le système d'éclairage (1) et la caméra (2), sachant que chaque ligne épipolaire (15) indique la migration d'un point de trame d'image (C) lors d'une telle modification d'écart dans le plan d'image (22),
- des moyens d'association (7) destinés à associer à chaque point de trame d'image (C) au moins une coordonnée spatiale du point de trame (9) correspondant sur l'objet, les moyens d'association comprenant pour chaque point de trame d'image (C) :
∘ des moyens (7) destinés à déterminer précisément une ligne épipolaire voisine (15) du point de trame d'image, parmi une pluralité de lignes épipolaires voisines, qui ont été pré-calculées et mémorisées dans les moyens de mémorisation (7), les moyens destinés à déterminer précisément une ligne épipolaire voisine (15) du point de trame d'image comprenant :
▪ des moyens (7) destinés à déterminer un écart (δ[i, j]) entre le point de trame d'image (C) ou la projection (P_{M}) du point de trame d'image (C) sur la ligne épipolaire (15) respective et au moins un point défini (P_{INF}) de la ligne épipolaire (15), chaque fois pour une pluralité de lignes épipolaires voisines (15) ;
▪ des moyens (7) destinés à choisir l'une desdites lignes épipolaires voisines (15), en considérant les écarts (δ[i, j] déterminés, sachant que les écarts (δ[i, j]) déterminés sont filtrés, pour exclure de telles lignes épipolaires (15) pour lesquelles les écarts déterminés sont inférieurs et/ou supérieurs à des valeurs limites (G1) ou valeurs moyennes définies et/ou se situent à l'extérieur d'intervalles définis (G₂, G₃),
▪ les moyens (7) destinés à déterminer un écart déterminant en tant qu'écarts l'écart entre le point de trame d'image (C) et le point limite (P_{_INF}) respectif des lignes épipolaires voisines (15) respectives ou l'écart (δ[i, j]) de la projection du point de trame d'image sur la ligne épipolaire voisine respective par rapport au point limite (P_{_INF}) respectif des lignes épipolaires voisines (15) respectives et les moyens (7) destinés à choisir l'une desdites lignes épipolaires voisines (15) filtrant lesdits écarts de telle sorte que les lignes épipolaires pour lesquelles l'écart (δ[i, j]) cité par rapport au point limite (P_{_INF}) de la ligne épipolaire (15) ne se situe pas à l'intérieur d'un intervalle (G₂, G₃) défini ou est inférieur à une valeur limite soient exclues lors de la détermination ;
∘ des moyens (7) destinés à déterminer le point (P_{M}) sur la ligne épipolaire (i, j) choisie qui est la plus proche du point de trame d'image,
∘ des moyens (7) destinés à associer une coordonnée spatiale du point de trame (9) correspondant sur l'objet (3) audit point (P_{M}) sur la ligne épipolaire, sachant que la coordonnée spatiale est fixée par le point déterminé, et
- des moyens (7) destinés à déterminer au moins un paramètre de la forme tridimensionnelle de l'objet (3) à partir des coordonnées spatiales déterminées.
